# EUROPEAN PATENT APPLICATION

(11) **EP 4 644 171 A1**
(43) Date of publication of application: **05.11.2025**
(21) Application number: 22969548.1
(22) Date of filing: 27.12.2022
(51) Int. Cl.: B60L 58/13, B60L 50/61, B60L 50/62, H02J 7/14, H02J 7/00, B60W 50/00

(54) **VEHICLE CONTROL METHOD AND APPARATUS, AND DEVICE AND STORAGE MEDIUM**

(71) Applicant: Shenzhen Yinwang Intelligent Technologies Co., Ltd., Shenzhen, Guangdong 518110 (CN)
(72) Inventor: ZHANG, Binbin, Shenzhen, Guangdong 518129 (CN); CHAI, Benben, Shenzhen, Guangdong 518129 (CN); PENG, Lei, Shenzhen, Guangdong 518129 (CN); WANG, Junhan, Shenzhen, Guangdong 518129 (CN); LIU, Fengyu, Shenzhen, Guangdong 518129 (CN); JIANG, Siwen, Shenzhen, Guangdong 518129 (CN); ZHANG, Wuyi, Shenzhen, Guangdong 518129 (CN)
(74) Representative: Gill Jennings & Every LLP
(86) International application number: PCT/CN2022/142541
(87) International publication number: WO 2024/138392

(57) **Abstract**

A vehicle control method and apparatus, a device, and a storage medium are provided. The method includes: The vehicle control apparatus determines a first level threshold of a vehicle based on a first running parameter of the vehicle, where the first running parameter includes an energy replenishment parameter and/or a temperature parameter, the energy replenishment parameter indicates an energy replenishment frequency and/or an energy replenishment amount of the vehicle, and the temperature parameter indicates a temperature at which the vehicle runs; and when a battery level of the vehicle is less than the first level threshold, controls an electricity generation apparatus of the vehicle to generate electricity. In this way, the level threshold of the vehicle is intelligently adjusted.

## Description

### TECHNICAL FIELD

This application relates to the field of mechatronics technologies, and in particular, to a vehicle control method and apparatus, a device, and a storage medium.

### BACKGROUND

A range-extended vehicle is also referred to as a series hybrid electric vehicle. The range-extended vehicle relies on a generator to supply electricity for a motor to drive the vehicle, and relies on an engine to output electricity to drive the generator to generate electricity, so that a level of the range-extended vehicle is maintained at a level threshold (or referred to as a level maintenance value) to increase an endurance range of the vehicle, that is, implement range extension of the vehicle.

In a related technology, a level threshold for triggering a vehicle to enable range-extended control is a fixed value. As a result, the vehicle cannot flexibly control, based on a change of an application scenario, an occasion at which the vehicle enables range-extended control. A level threshold that is set high affects economy of the vehicle, and a level threshold that is set low affects power performance of the vehicle. Therefore, how to intelligently adjust the level threshold of the vehicle to enable power performance and vehicle use economy of the vehicle to meet a user requirement or be applicable to a current traveling environment is an urgent problem to be resolved currently.

### SUMMARY

Embodiments of this application provide a vehicle control method and apparatus, a device, and a storage medium, to intelligently adjust power performance and vehicle use economy of a vehicle.

According to a first aspect, an embodiment of this application provides a vehicle control method. The method includes: determining a first level threshold of a vehicle based on a first running parameter of the vehicle, where the first running parameter includes an energy replenishment parameter and/or a temperature parameter, the energy replenishment parameter indicates an energy replenishment frequency and/or an energy replenishment amount of the vehicle, and the temperature parameter indicates a temperature at which the vehicle runs; and when a battery level of the vehicle is less than the first level threshold, controlling an electricity generation apparatus of the vehicle to generate electricity.

According to the vehicle control method provided in the first aspect, the first level threshold is determined based on the first running parameter, so that a level threshold of the vehicle is intelligently adjusted.

In a possible implementation, the energy replenishment parameter includes a level replenishment parameter, and the first level threshold is in a negative correlation with the level replenishment parameter of the vehicle; and/or the energy replenishment parameter includes a fuel replenishment parameter, and the first level threshold is in a positive correlation with the fuel replenishment parameter of the vehicle.

According to the vehicle control method provided in this implementation, a higher level replenishment frequency or a larger level replenishment amount indicates that a user has a higher tendency to use a pure electric endurance range of the vehicle, to improve economy of the vehicle or facilitate charging of the vehicle by the user. In this case, regardless of a vehicle use economy requirement of the user or a vehicle use habit of the user, the first level threshold is in a negative correlation with the level replenishment frequency, so that vehicle use economy can be improved, and range-extended control can match the user.

In a possible implementation, the first level threshold is in a negative correlation with the temperature parameter.

According to the vehicle control method provided in this implementation, a higher fuel replenishment frequency or a larger fuel replenishment amount indicates that the user has a higher tendency to use a fuel oil endurance range of the vehicle, or has a higher power performance requirement of the vehicle. In this case, in consideration of a vehicle use habit of the user and power performance of the vehicle, the first level threshold is in a positive correlation with the fuel replenishment frequency, so that power performance of the vehicle can be improved, and range-extended control can match the user.

In a possible implementation, the determining a first level threshold of a vehicle based on a first running parameter of the vehicle includes: determining a first level threshold in a second adjustment phase based on an energy replenishment parameter of the vehicle in a first adjustment phase, where the second adjustment phase is later than the first adjustment phase; and the vehicle performs at least one of the following in the first adjustment phase: traveling a first preset range; or running duration is first preset duration; or completing N driving cycles, where N is a positive integer.

According to the vehicle control method provided in this implementation, the level threshold is adjusted in a phased manner. This reduces overheads of a control apparatus, and improves processing efficiency.

In a possible implementation, the energy replenishment parameter includes the energy replenishment parameter in the first adjustment phase; and the determining a first level threshold in a second adjustment phase based on an energy replenishment parameter of the vehicle in a first adjustment phase includes: determining the first level threshold in the second adjustment phase from a first correspondence based on the energy replenishment parameter in the first adjustment phase, where the first correspondence is a correspondence between the first level threshold and the energy replenishment parameter, where the energy replenishment parameter includes a level replenishment parameter, and the first level threshold in the first correspondence is in a negative correlation with the level replenishment parameter; and/or the energy replenishment parameter includes a fuel replenishment parameter, and the first level threshold in the first correspondence is in a positive correlation with the fuel replenishment parameter.

According to the vehicle control method provided in this implementation, the first level threshold in the second adjustment phase is determined in the first correspondence based on the energy replenishment parameter in the first adjustment phase. This improves processing efficiency of determining the first level threshold, and reduces overheads of the control apparatus.

In a possible implementation, a pure electric endurance range of the vehicle at a level replenishment frequency or a level replenishment amount in the first adjustment phase is greater than a first range, and a difference between the pure electric endurance range and the first range is greater than a first preset value, and the first level threshold in the second adjustment phase is less than a first level threshold in the first adjustment phase; or a pure electric endurance range of the vehicle at a level replenishment frequency or a level replenishment amount in the first adjustment phase is less than a first range, and a difference between the pure electric endurance range and the first range is greater than a first preset value, and the first level threshold in the second adjustment phase is greater than a first level threshold in the first adjustment phase; or a pure electric endurance range of the vehicle at a level replenishment frequency or a level replenishment amount in the first adjustment phase is equal to a first range or a difference between the pure electric endurance range and the first range is less than a first preset value, and the first level threshold in the second adjustment phase is equal to a first level threshold in the first adjustment phase, where the vehicle travels the first preset range in the first adjustment phase, and the first range is the first preset range; or running duration of the vehicle in the first adjustment phase is the first preset duration, and the first range is a predicted value of a traveling range of the vehicle in the first adjustment phase based on the first preset duration.

According to the vehicle control method provided in this implementation, the pure electric endurance range reflected by the level replenishment frequency or the level replenishment amount can accurately reflect a level replenishment status of the vehicle, to accurately identify a vehicle use habit of the user, and further determine an accurate first level threshold.

In a possible implementation, a fuel endurance range of the vehicle at a fuel replenishment frequency or a fuel replenishment amount in the first adjustment phase is greater than a first range and a difference between the fuel endurance range and the first range is greater than a second preset value, and a level maintenance value in the second adjustment phase is greater than a level maintenance value in the first adjustment phase; or a fuel endurance range of the vehicle at a fuel replenishment frequency or a fuel replenishment amount in the first adjustment phase is less than a first range and a difference between the fuel endurance range and the first range is greater than a second preset value, and the first level threshold in the second adjustment phase is less than a level maintenance value in the first adjustment phase; or a fuel endurance range of the vehicle at a fuel replenishment frequency or a fuel replenishment amount in the first adjustment phase is equal to a first range or a difference between the fuel endurance range and the first range is less than a second preset value, and the first level threshold in the second adjustment phase is equal to a first level threshold in the first adjustment phase, where the vehicle travels the first preset range in the first adjustment phase, and the first range is the first preset range; or running duration of the vehicle in the first adjustment phase is the first preset duration, and the first range is a predicted value of a traveling range of the vehicle in the first adjustment phase based on the first preset duration.

According to the vehicle control method provided in this implementation, the pure electric endurance range reflected by the fuel replenishment frequency or the fuel replenishment amount can accurately reflect a fuel replenishment status of the vehicle, to accurately identify a vehicle use habit of the user, and further determine an accurate first level threshold.

In a possible implementation, the determining a first level threshold in a second adjustment phase based on an energy replenishment parameter of the vehicle in a first adjustment phase includes: determining the first level threshold in the second adjustment phase based on a first frequency interval in which an energy replenishment frequency of the vehicle in the first adjustment phase falls; or determining the first level threshold in the second adjustment phase based on a first energy interval in which an energy replenishment amount of the vehicle in the first adjustment phase falls; or determining a first candidate threshold based on a first frequency interval in which an energy replenishment frequency of the vehicle in the first adjustment phase falls, determining a second candidate threshold based on a first energy interval in which an energy replenishment amount of the vehicle in the first adjustment phase falls, and then determining the first level threshold based on the first candidate threshold and the second candidate threshold. The first frequency interval is included in M1 preset frequency intervals, M1 is a positive integer, and the M1 preset frequency intervals are in a one-to-one correspondence with M1 preset thresholds. The first energy interval is included in M2 preset energy intervals, M2 is a positive integer, and the M2 preset frequency intervals are in a one-to-one correspondence with M2 preset thresholds.

According to the vehicle control method provided in this implementation, each preset interval (including a preset frequency interval and/or a preset energy interval) corresponds to one first level threshold, so that the first level threshold can be determined based on an interval in which an energy replenishment parameter falls. This improves processing efficiency.

In a possible implementation, the determining a first level threshold in a second adjustment phase based on an energy replenishment parameter of the vehicle in a first adjustment phase includes: determining a level maintenance adjustment amount in the second adjustment phase based on a second frequency interval in which an energy replenishment frequency of the vehicle in the first adjustment phase falls; or determining a level maintenance adjustment amount in the second adjustment phase based on a second energy interval in which an energy replenishment amount of the vehicle in the first adjustment phase falls; or determining a first level maintenance adjustment amount based on a second frequency interval in which an energy replenishment frequency of the vehicle in the first adjustment phase falls, determining a second level maintenance adjustment amount based on a second energy interval in which an energy replenishment amount of the vehicle in the first adjustment phase falls, and determining a level maintenance adjustment amount in the second adjustment phase based on the first level maintenance adjustment amount and the second level maintenance adjustment amount, where the second frequency interval is included in M3 preset frequency intervals, M3 is a positive integer, and the M3 preset frequency intervals are in a one-to-one correspondence with M3 level maintenance adjustment amounts; and the second energy interval is included in M4 preset energy intervals, M4 is a positive integer, and the M4 preset frequency intervals are in a one-to-one correspondence with M4 level maintenance adjustment amounts; and adjusting a first level threshold in the first adjustment phase based on the level maintenance adjustment amount in the second adjustment phase, to obtain the first level threshold in the second adjustment phase.

According to the vehicle control method provided in this implementation, each preset interval (including a preset frequency interval and/or a preset energy interval) corresponds to one first level threshold, so that the first level threshold can be determined based on an interval in which an energy replenishment parameter falls. This improves processing efficiency.

In a possible implementation, the method further includes: determining, as the energy replenishment frequency of the vehicle in the first adjustment phase, a total quantity of energy replenishment times energy replenishment duration is longer than or equal to preset energy replenishment duration for the vehicle in the first adjustment phase.

According to the vehicle control method provided in this implementation, the quantity of energy replenishment times is accumulated when the energy replenishment duration is longer than the preset energy replenishment duration. This avoids a situation in which some energy replenishment processes with excessively short time are identified as one time of energy replenishment, implements noise filtering, and improves accuracy of user preference identification.

In a possible implementation, the determining a first level threshold of a vehicle based on a first running parameter of the vehicle includes: determining the first level threshold of the vehicle based on a first temperature interval in which a minimum ambient temperature at which the vehicle runs in a first detection interval falls; or determining the first level threshold of the vehicle based on a second temperature interval in which a minimum battery temperature at which the vehicle runs in a first detection interval falls; or determining a third candidate threshold based on a first temperature interval in which a minimum ambient temperature at which the vehicle runs in a first detection interval falls, determining a fourth candidate threshold based on a second temperature interval in which a minimum battery temperature at which the vehicle runs in the first detection interval falls, and then determining the first level threshold of the vehicle based on the third candidate threshold and the fourth candidate threshold. The vehicle runs N driving cycles in the first detection interval or running duration of the vehicle in the first detection interval is second preset duration, N is a positive integer, both the first temperature interval and the second temperature interval are included in L preset temperature intervals, L is a positive integer, and the L preset temperature intervals are in a one-to-one correspondence with L first level thresholds.

According to the vehicle control method provided in this implementation, a corresponding level threshold is determined based on a temperature interval in which the temperature parameter falls. This avoids a situation in which one level threshold is set for each temperature, saves storage space, and improves processing efficiency.

In a possible implementation, the first level threshold is greater than or equal to a first battery level, the first battery level is a minimum level required for a battery to provide a first discharge power for the vehicle at a first temperature, and the first discharge power has a capability of driving the vehicle.

According to the vehicle control method provided in this implementation, the first level threshold can meet a minimum level requirement for driving the vehicle. This avoids impact on power performance of the vehicle.

In a possible implementation, a difference in detection time of a minimum temperature or a minimum ambient temperature in any two adjacent driving cycles in the N driving cycles is less than or equal to a preset time difference.

According to the vehicle control method provided in this implementation, the ambient temperature may change greatly as time moves. Therefore, this avoids a situation in which the first level threshold is determined based on an ambient temperature or a battery temperature that is recorded earlier, and improves accuracy of the first level threshold.

In a possible implementation, the determining a first level threshold of a vehicle based on a first running parameter of the vehicle includes: determining a fifth candidate threshold of the vehicle based on the energy replenishment parameter of the vehicle, and determining a sixth candidate threshold of the vehicle based on the temperature parameter; and determining the first level threshold of the vehicle based on the fifth candidate threshold and the sixth candidate threshold.

According to the vehicle control method provided in this implementation, the first level threshold is determined based on the energy replenishment parameter and the temperature parameter, so that the determined first level threshold is adapted to a vehicle use habit of the user and a traveling environment.

In a possible implementation, the first level threshold of the vehicle is a larger value between the fifth candidate threshold and the sixth candidate threshold.

According to the vehicle control method provided in this implementation, the first level threshold is not less than either of the fifth candidate threshold and the sixth candidate threshold. This avoids impact on power performance of the vehicle while ensuing vehicle use economy.

In a possible implementation, a level replenishment frequency of the vehicle is determined based on the battery level of the vehicle.

According to the vehicle control method provided in this implementation, the control apparatus may determine, based on the battery level, whether the vehicle is charged, to determine the level replenishment frequency. This avoids an error caused by invalid charging to detection of the level replenishment frequency.

In a possible implementation, the battery level of the vehicle is equal to a second level threshold of the vehicle, or a difference between the battery level of the vehicle and the second level threshold is less than or equal to a first preset value, the level replenishment frequency of the vehicle is 0, and the second level threshold is a level threshold of the vehicle in a level replenishment frequency detection phase.

According to the vehicle control method provided in this implementation, when the difference between the battery level and a current level threshold of the vehicle is always small (that is, less than or equal to the first preset value), it indicates that no level replenishment is performed on the vehicle, that is, the level replenishment frequency is 0. This implements accurate detection of the level replenishment frequency.

According to a second aspect, an embodiment of this application provides a vehicle control method. The method further includes: obtaining a second running parameter of a vehicle, where the second running parameter includes at least one of an energy replenishment parameter, a traveling frequency, and a temperature parameter, the energy replenishment parameter indicates an energy replenishment frequency and/or an energy replenishment amount of the vehicle, and the temperature parameter indicates a temperature at which the vehicle runs; and controlling, based on the second running parameter, the vehicle to push mode switching information, where the mode switching information indicates a user to switch to a first mode, and a first level threshold of the vehicle in the first mode is determined based on the energy replenishment parameter and/or the temperature parameter of the vehicle.

According to the vehicle control method provided in the second aspect, automatic switching to the first mode is implemented based on at least one of the energy replenishment parameter, the traveling frequency, and the temperature parameter, so that a first level threshold of the vehicle can be dynamically adjusted to match a user requirement or a vehicle traveling environment.

In a possible implementation, a current mode is a second mode, a level threshold of the vehicle in the second mode is a first value, the first value is greater than or equal to the first level threshold of the vehicle in the first mode, and the energy replenishment parameter includes a level replenishment parameter and/or a fuel replenishment parameter; and the energy replenishment parameter of the vehicle meets at least one of the following, and the mode switching information indicates the user to switch from the second mode to the first mode: a level replenishment frequency of the vehicle is greater than or equal to a preset level replenishment frequency; a fuel replenishment frequency of the vehicle is less than or equal to a preset fuel replenishment frequency; and the temperature parameter is greater than or equal to a preset temperature.

According to the vehicle control method provided in this implementation, a higher level replenishment frequency indicates that the user has a higher tendency to improve vehicle use economy; a lower fuel replenishment frequency indicates that the user has a higher tendency to improve vehicle use economy; and when a value of the temperature parameter is greater than the preset temperature, power performance of the vehicle is not affected due to a low-temperature environment (for example, an extreme-cold environment with a temperature below -10 degrees Celsius). In either case, the level threshold in the second mode does not match a vehicle use habit of the user. Therefore, the mode switching information may be pushed to indicate the user to switch from the second mode to the first mode. This improves vehicle use economy.

In a possible implementation, the traveling frequency includes a quantity of traveling times of the vehicle in a third mode, a level threshold of the vehicle in the third mode is a second value, and the second value is less than or equal to the first level threshold of the vehicle in the first mode; and the quantity of traveling times of the vehicle in the third mode is greater than or equal to a preset quantity of traveling times, and the mode switching information indicates the user to switch from the third mode to the first mode.

According to the vehicle control method provided in this implementation, when a quantity of traveling times is large, it is considered that the vehicle may always travel in an initial mode because the user may not learn a mode. In this case, the mode switching information is pushed to the user, so that the user can select the first mode to intelligently adjust economy and power performance of the vehicle.

In a possible implementation, a battery level of the vehicle in a current driving cycle is less than or equal to a first preset battery level.

According to the vehicle control method provided in this implementation, for a case in which a battery level of the vehicle is always low, if the vehicle continues to travel in the third mode, power performance of the vehicle is greatly affected. Therefore, it is recommended that the user switch to the first mode, so that the power performance of the vehicle can be improved by intelligently adjusting a level threshold.

In a possible implementation, a current mode is a third mode; and the temperature parameter is less than or equal to a preset temperature and duration is longer than or equal to third preset duration, and the mode switching information indicates the user to switch from the third mode to the first mode.

According to the vehicle control method provided in this implementation, large impact of a low-temperature environment on power performance of the vehicle can be avoided, and switching from the third mode to the first mode may intelligently adjust the level threshold in the first mode. This improves power performance of the vehicle.

In a possible implementation, the temperature parameter is less than or equal to the preset temperature and the duration is longer than or equal to the third preset duration and a battery level of the vehicle is less than or equal to a second preset battery level, and the mode switching information indicates the user to switch from the third mode to the first mode.

According to the vehicle control method provided in this implementation, when the vehicle travels in a low-temperature environment with a low battery level, switching from the third mode to the first mode helps improve power performance of the vehicle.

In a possible implementation, the level replenishment frequency of the vehicle is determined based on the battery level of the vehicle.

In a possible implementation, the battery level of the vehicle is equal to a third level threshold of the vehicle, or a difference between the battery level of the vehicle and the third level threshold of the vehicle is less than or equal to a second preset value, the level replenishment frequency of the vehicle is 0, and the third level threshold is a level threshold of the vehicle in a level replenishment frequency detection phase.

According to a third aspect, an embodiment of this application provides a vehicle control apparatus, including: a threshold determining module, configured to determine a first level threshold of a vehicle based on a first running parameter of the vehicle, where the first running parameter includes an energy replenishment parameter and/or a temperature parameter, the energy replenishment parameter indicates an energy replenishment frequency and/or an energy replenishment amount of the vehicle, and the temperature parameter indicates a temperature at which the vehicle runs; and a range-extended control module, configured to: when a battery level of the vehicle is less than the first level threshold, control an electricity generation apparatus of the vehicle to generate electricity.

In a possible implementation, the energy replenishment parameter includes a level replenishment parameter, and the first level threshold is in a negative correlation with the level replenishment parameter of the vehicle; and/or the energy replenishment parameter includes a fuel replenishment parameter, and the first level threshold is in a positive correlation with the fuel replenishment parameter of the vehicle.

In a possible implementation, the first level threshold is in a negative correlation with the temperature parameter.

In a possible implementation, the threshold determining module is specifically configured to: determine a first level threshold in a second adjustment phase based on an energy replenishment parameter of the vehicle in a first adjustment phase, where the second adjustment phase is later than the first adjustment phase; and the vehicle performs at least one of the following in the first adjustment phase: traveling a first preset range; or running duration is first preset duration; or completing N driving cycles, where N is a positive integer.

In a possible implementation, the energy replenishment parameter includes the energy replenishment parameter in the first adjustment phase; and the threshold determining module is specifically configured to: determine the first level threshold in the second adjustment phase from a first correspondence based on the energy replenishment parameter in the first adjustment phase, where the first correspondence is a correspondence between the first level threshold and the energy replenishment parameter, where the energy replenishment parameter includes a level replenishment parameter, and the first level threshold in the first correspondence is in a negative correlation with the level replenishment parameter; and/or the energy replenishment parameter includes a fuel replenishment parameter, and the first level threshold in the first correspondence is in a positive correlation with the fuel replenishment parameter.

In a possible implementation, a pure electric endurance range of the vehicle at a level replenishment frequency or a level replenishment amount in the first adjustment phase is greater than a first range, and a difference between the pure electric endurance range and the first range is greater than a first preset value, and the first level threshold in the second adjustment phase is less than a first level threshold in the first adjustment phase; or a pure electric endurance range of the vehicle at a level replenishment frequency or a level replenishment amount in the first adjustment phase is less than a first range, and a difference between the pure electric endurance range and the first range is greater than a first preset value, and the first level threshold in the second adjustment phase is greater than a first level threshold in the first adjustment phase; or a pure electric endurance range of the vehicle at a level replenishment frequency or a level replenishment amount in the first adjustment phase is equal to a first range or a difference between the pure electric endurance range and the first range is less than a first preset value, and the first level threshold in the second adjustment phase is equal to a first level threshold in the first adjustment phase, where the vehicle travels the first preset range in the first adjustment phase, and the first range is the first preset range; or running duration of the vehicle in the first adjustment phase is the first preset duration, and the first range is a predicted value of a traveling range of the vehicle in the first adjustment phase based on the first preset duration.

In a possible implementation, a fuel endurance range of the vehicle at a fuel replenishment frequency or a fuel replenishment amount in the first adjustment phase is greater than a first range and a difference between the fuel endurance range and the first range is greater than a second preset value, and a level maintenance value in the second adjustment phase is greater than a level maintenance value in the first adjustment phase; or a fuel endurance range of the vehicle at a fuel replenishment frequency or a fuel replenishment amount in the first adjustment phase is less than a first range and a difference between the fuel endurance range and the first range is greater than a second preset value, and the first level threshold in the second adjustment phase is less than a level maintenance value in the first adjustment phase; or a fuel endurance range of the vehicle at a fuel replenishment frequency or a fuel replenishment amount in the first adjustment phase is equal to a first range or a difference between the fuel endurance range and the first range is less than a second preset value, and the first level threshold in the second adjustment phase is equal to a first level threshold in the first adjustment phase, where the vehicle travels the first preset range in the first adjustment phase, and the first range is the first preset range; or running duration of the vehicle in the first adjustment phase is the first preset duration, and the first range is a predicted value of a traveling range of the vehicle in the first adjustment phase based on the first preset duration.

In a possible implementation, the threshold determining module is specifically configured to: determine the first level threshold in the second adjustment phase based on a first frequency interval in which an energy replenishment frequency of the vehicle in the first adjustment phase falls; or determine the first level threshold in the second adjustment phase based on a first energy interval in which an energy replenishment amount of the vehicle in the first adjustment phase falls; or determine a first candidate threshold based on a first frequency interval in which an energy replenishment frequency of the vehicle in the first adjustment phase falls, determine a second candidate threshold based on a first energy interval in which an energy replenishment amount of the vehicle in the first adjustment phase falls, and then determine the first level threshold based on the first candidate threshold and the second candidate threshold. The first frequency interval is included in M1 preset frequency intervals, M1 is a positive integer, and the M1 preset frequency intervals are in a one-to-one correspondence with M1 preset thresholds. The first energy interval is included in M2 preset energy intervals, M2 is a positive integer, and the M2 preset frequency intervals are in a one-to-one correspondence with M2 preset thresholds.

In a possible implementation, the threshold determining module is specifically configured to: determine a level maintenance adjustment amount in the second adjustment phase based on a second frequency interval in which an energy replenishment frequency of the vehicle in the first adjustment phase falls; or determine a level maintenance adjustment amount in the second adjustment phase based on a second energy interval in which an energy replenishment amount of the vehicle in the first adjustment phase falls; or determine a first level maintenance adjustment amount based on a second frequency interval in which an energy replenishment frequency of the vehicle in the first adjustment phase falls, determine a second level maintenance adjustment amount based on a second energy interval in which an energy replenishment amount of the vehicle in the first adjustment phase falls, and determine a level maintenance adjustment amount in the second adjustment phase based on the first level maintenance adjustment amount and the second level maintenance adjustment amount, where the second frequency interval is included in M3 preset frequency intervals, M3 is a positive integer, and the M3 preset frequency intervals are in a one-to-one correspondence with M3 level maintenance adjustment amounts; and the second energy interval is included in M4 preset energy intervals, M4 is a positive integer, and the M4 preset frequency intervals are in a one-to-one correspondence with M4 level maintenance adjustment amounts; and adjust a first level threshold in the first adjustment phase based on the level maintenance adjustment amount in the second adjustment phase, to obtain the first level threshold in the second adjustment phase.

In a possible implementation, the threshold determining module is further configured to: determine, as the energy replenishment frequency of the vehicle in the first adjustment phase, a total quantity of energy replenishment times energy replenishment duration is longer than or equal to preset energy replenishment duration for the vehicle in the first adjustment phase.

In a possible implementation, the threshold determining module is specifically configured to: determine the first level threshold of the vehicle based on a first temperature interval in which a minimum ambient temperature at which the vehicle runs in a first detection interval falls; or determine the first level threshold of the vehicle based on a second temperature interval in which a minimum battery temperature at which the vehicle runs in a first detection interval falls; or determine a third candidate threshold based on a first temperature interval in which a minimum ambient temperature at which the vehicle runs in a first detection interval falls, determine a fourth candidate threshold based on a second temperature interval in which a minimum battery temperature at which the vehicle runs in the first detection interval falls, and then determine the first level threshold of the vehicle based on the third candidate threshold and the fourth candidate threshold. The vehicle runs N driving cycles in the first detection interval or running duration of the vehicle in the first detection interval is second preset duration, N is a positive integer, both the first temperature interval and the second temperature interval are included in L preset temperature intervals, L is a positive integer, and the L preset temperature intervals are in a one-to-one correspondence with L first level thresholds.

In a possible implementation, the first level threshold is greater than or equal to a first battery level, the first battery level is a minimum level required for a battery to provide a first discharge power for the vehicle at a first temperature, and the first discharge power has a capability of driving the vehicle.

In a possible implementation, a difference in detection time of a minimum temperature or a minimum ambient temperature in any two adjacent driving cycles in the N driving cycles is less than or equal to a preset time difference.

In a possible implementation, the threshold determining module is specifically configured to: determine a fifth candidate threshold of the vehicle based on the energy replenishment parameter of the vehicle, and determine a sixth candidate threshold of the vehicle based on the temperature parameter; and determine the first level threshold of the vehicle based on the fifth candidate threshold and the sixth candidate threshold.

In a possible implementation, the first level threshold of the vehicle is a larger value between the fifth candidate threshold and the sixth candidate threshold.

In a possible implementation, a level replenishment frequency of the vehicle is determined based on the battery level of the vehicle.

In a possible implementation, the battery level of the vehicle is equal to a second level threshold of the vehicle, or a difference between the battery level of the vehicle and the second level threshold is less than or equal to a first preset value, the level replenishment frequency of the vehicle is 0, and the second level threshold is a level threshold of the vehicle in a level replenishment frequency detection phase.

For beneficial effects of the vehicle control apparatus provided in the third aspect and the various possible implementations of the third aspect, refer to the beneficial effects brought by the first aspect and the various possible implementations of the first aspect. Details are not described herein again.

According to a fourth aspect, an embodiment of this application provides a vehicle control apparatus, including: an obtaining module, configured to obtain a second running parameter of a vehicle, where the second running parameter includes at least one of an energy replenishment parameter, a traveling frequency, and a temperature parameter, the energy replenishment parameter indicates an energy replenishment frequency and/or an energy replenishment amount of the vehicle, and the temperature parameter indicates a temperature at which the vehicle runs; and a mode switching control module, configured to control, based on the second running parameter, the vehicle to push mode switching information, where the mode switching information indicates a user to switch to a first mode, and a first level threshold of the vehicle in the first mode is determined based on the energy replenishment parameter and/or the temperature parameter of the vehicle.

In a possible implementation, a current mode is a second mode, a level threshold of the vehicle in the second mode is a first value, the first value is greater than or equal to the first level threshold of the vehicle in the first mode, and the energy replenishment parameter includes a level replenishment parameter and/or a fuel replenishment parameter; and the energy replenishment parameter of the vehicle meets at least one of the following, and the mode switching information indicates the user to switch from the second mode to the first mode: a level replenishment frequency of the vehicle is greater than or equal to a preset level replenishment frequency; a fuel replenishment frequency of the vehicle is less than or equal to a preset fuel replenishment frequency; and the temperature parameter is greater than or equal to a preset temperature.

In a possible implementation, the traveling frequency includes a quantity of traveling times of the vehicle in a third mode, a level threshold of the vehicle in the third mode is a second value, and the second value is less than or equal to the first level threshold of the vehicle in the first mode; and the quantity of traveling times of the vehicle in the third mode is greater than or equal to a preset quantity of traveling times, and the mode switching information indicates the user to switch from the third mode to the first mode.

In a possible implementation, a battery level of the vehicle in a current driving cycle is less than or equal to a first preset battery level.

In a possible implementation, a current mode is a third mode; and the temperature parameter is less than or equal to a preset temperature and duration is longer than or equal to third preset duration, and the mode switching information indicates the user to switch from the third mode to the first mode.

In a possible implementation, the temperature parameter is less than or equal to the preset temperature and the duration is longer than or equal to the third preset duration and a battery level of the vehicle is less than or equal to a second preset battery level, and the mode switching information indicates the user to switch from the third mode to the first mode.

In a possible implementation, the level replenishment frequency of the vehicle is determined based on the battery level of the vehicle.

In a possible implementation, the battery level of the vehicle is equal to a third level threshold of the vehicle, or a difference between the battery level of the vehicle and the third level threshold of the vehicle is less than or equal to a second preset value, the level replenishment frequency of the vehicle is 0, and the third level threshold is a level threshold of the vehicle in a level replenishment frequency detection phase.

For beneficial effects of the vehicle control apparatus provided in the fourth aspect and the various possible implementations of the fourth aspect, refer to the beneficial effects brought by the second aspect and the various possible implementations of the second aspect. Details are not described herein again.

According to a fifth aspect, an embodiment of this application provides a vehicle, including the vehicle control apparatus according to the third aspect, the fourth aspect, or the various possible implementations.

According to a sixth aspect, an embodiment of this application provides a chip, including a processor, configured to invoke computer instructions from a memory and run the computer instructions, so that a device in which the chip is installed performs the method in any one of the first aspect, the second aspect, or the various possible implementations.

According to a seventh aspect, an embodiment of this application provides a computer-readable storage medium, configured to store computer program instructions. The computer program enables a computer to perform the method in any one of the first aspect, the second aspect, or the various possible implementations.

According to an eighth aspect, an embodiment of this application provides a computer program product, including computer program instructions. The computer program instructions enable a computer to perform the method in any one of the first aspect, the second aspect, or the various possible implementations.

### BRIEF DESCRIPTION OF DRAWINGS

FIG. 1 is a diagram of a hardware structure of a vehicle according to an embodiment of this application;
FIG. 2 is a schematic flowchart of a vehicle control method according to an embodiment of this application;
FIG. 3a is a diagram in which a level threshold changes with a temperature parameter according to an embodiment of this application;
FIG. 3b is a diagram of phased adjustment of a level threshold according to an embodiment of this application;
FIG. 4a is a schematic flowchart of a vehicle control method according to an embodiment of this application;
FIG. 4b is a schematic flowchart of a vehicle control method according to an embodiment of this application;
FIG. 4c is a schematic flowchart of a vehicle control method according to an embodiment of this application;
FIG. 4d is a schematic flowchart of a vehicle control method according to an embodiment of this application;
FIG. 5 is a schematic flowchart of a vehicle control method according to an embodiment of this application;
FIG. 6a is a diagram of a display interface according to an embodiment of this application;
FIG. 6b is a diagram of another display interface according to an embodiment of this application;
FIG. 7 is a block diagram of a vehicle control apparatus according to an embodiment of this application; and
FIG. 8 is another block diagram of a vehicle control apparatus according to an embodiment of this application.

### DESCRIPTION OF EMBODIMENTS

To facilitate understanding of this application, a range-extended vehicle and related terms are first described.

The range-extended vehicle relies on a battery to supply electricity for a motor to drive the vehicle. A difference between the range-extended vehicle and a common electric vehicle lies in that a user not only can charge the range-extended vehicle through a power grid system, but also can perform level replenishment on the battery through range-extended control during vehicle running. In this way, the battery can continue to supply electricity to the motor, thereby increasing an endurance range of the vehicle, and implementing range extension of the vehicle.

When the range-extended vehicle does not enable range-extended control, a travelable range is a pure electric endurance range. After the range-extended vehicle enables range-extended control, a travelable range is a fuel endurance range.

Range-extended control means that an engine consumes fuel (such as fuel oil and gas) to generate a driving force to drive a generator to generate electricity and perform energy replenishment on the battery, so that a battery level is maintained at a level threshold. For example, when a state of charge (state of charge, SOC) of the battery is less than a preset level threshold, range-extended control above may be triggered. When the level threshold is high, the vehicle maintains in a state with a high battery level, and the vehicle has good power performance. When the level threshold is low, a pure electric endurance range of the vehicle is long, and the vehicle has good vehicle use economy. In embodiments of this application, the battery level of the battery and the SOC of the battery have a same meaning.

The level threshold may be preset in the vehicle, or may be set by the user. Currently, in an implementation of a related technology, the level threshold may be input by the user through an interface operation or may be selected from a plurality of candidate level thresholds in an interface, and the vehicle performs range-extended control based on the level threshold. In another implementation of the related technology, different preset modes may correspond to different level thresholds, the user selects one mode from at least two modes through an interface operation, and the vehicle performs range-extended control based on a level threshold corresponding to the mode.

However, no matter which manner is used to set the level threshold, the level threshold cannot be flexibly adjusted. Consequently, it is difficult to adjust power performance and vehicle use economy of the vehicle according to a user requirement or a change of a traveling environment, and user experience is reduced.

For the problem that the level threshold cannot be flexibly adjusted, in this application, a first level threshold is dynamically adjusted based on a running parameter that can reflect a vehicle use habit of a user or a traveling environment of a vehicle, so that power performance and vehicle use economy of the vehicle can meet a user requirement or match a current traveling environment.

The mode may include but is not limited to at least one of a pure electric priority mode, a fuel oil priority mode, and a fuel-electric hybrid mode. In the pure electric priority mode, a level threshold is low. In the fuel oil priority mode, a level threshold is high. In the fuel-electric hybrid mode, a level threshold may be higher than the level threshold in the pure electric priority mode and lower than the level threshold in the fuel oil priority mode.

The level threshold may also be referred to as a SOC threshold, a level maintenance value, or the like. This is not limited in this application.

A name of the range-extended vehicle is not limited in this application. For example, the range-extended vehicle may also be referred to as an extended-range vehicle, an extended-range electric vehicle, a series hybrid electric vehicle, or the like. A vehicle that can implement related range-extended control falls within the protection scope of this application. For brevity, the range-extended vehicle is collectively referred to as a vehicle below.

The following describes technical solutions in embodiments of this application with reference to the accompanying drawings in embodiments of this application.

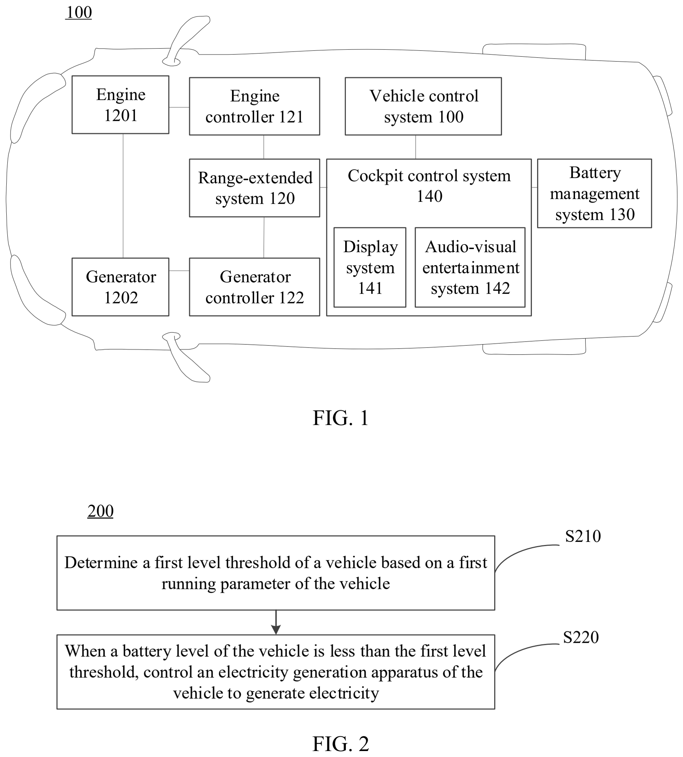

FIG. 1 is a diagram of a hardware structure of a vehicle according to an embodiment of this application. As shown in FIG. 1, the vehicle 100 includes but is not limited to some or all of a vehicle control system 110, a range-extended system 120, a battery management system 130, and a cockpit control system 140. The vehicle control system 110 may be separately connected to the range-extended system 120, the battery management system 130, and the cockpit control system 140.

The range-extended system 120 may receive a control instruction of the vehicle control system 110, and enable range-extended control in response to the control instruction. The range-extended system 120 may include an engine controller 121 and a generator controller 122. When the range-extended system 120 enables range-extended control, the engine controller 121 may control an engine 1201 to provide a driving force, and the generator controller 122 may control a generator 1202 to generate electricity under driving of the engine 1201, to replenish a battery level, so that a motor can obtain the battery level to drive the vehicle to travel.

The battery management system 130 may be configured to obtain a SOC of a battery of the vehicle, for example, calculate the SOC of the battery based on an output voltage, an output current, and the like of the battery.

The cockpit control system 140 may include at least a display system 141 and an audio-visual entertainment system 142. The display system 141 may provide a human-computer interaction interface, and the audio-visual entertainment system 142 may be connected to a stereo, a microphone, an atmosphere light, a seat, and the like that are deployed in the vehicle, to implement perceptual interaction with a user. For example, the cockpit control system 140 may obtain an operation of the user through the display system 141 to generate a user instruction, or display information (for example, display a vehicle status or display mode switching information below) through the display system 141. For another example, the audio-visual entertainment system 142 receives voice data input by the user to generate a user instruction, or the audio-visual entertainment system 142 pushes information to the user in a perceptual interaction manner, for example, plays the mode switching information below.

In addition, the cockpit control system 140 may also be connected to sensors deployed in the vehicle, for example, a temperature sensor, an air quality sensor, and an image sensor (such as a camera).

For example, the vehicle control system 110 may interact with the battery management system 130 to obtain the SOC of the battery of the vehicle. Further, the vehicle control system 110 may compare the SOC of the battery with a level threshold. When the SOC of the battery of the vehicle is less than the level threshold, the vehicle control system 110 sends a control instruction to the range-extended system 120, to control the range-extended system to enable range-extended control.

For example, the vehicle control system 110 interacts with the cockpit control system 140, so that the vehicle control system 110 may obtain a user instruction through the cockpit control system 140 or push information through the cockpit control system 140. For example, the vehicle control system 110 may display a range-extended setting interface to the user through the cockpit control system 140, so that the user may set a level threshold in the range-extended setting interface. The cockpit control system 140 generates a user instruction based on an operation of the user. The user instruction carries the level threshold. The vehicle control system 110 obtains the user instruction sent by the cockpit control system 140, and determines, based on the level threshold set by the user, whether to enable range-extended control.

In some embodiments, the cockpit control system 140 may replace the vehicle control system 110 to determine to push information, for example, display the range-extended device interface, to the user without responding to control of the vehicle control system 110. In other words, both the cockpit control system 140 and the vehicle control system 110 may be used as execution bodies for determining to push information and performing information pushing. The following provides descriptions with reference to examples.

The following describes in detail a vehicle control method provided in embodiments of this application with reference to the accompanying drawings.

For ease of understanding and description, the following describes the method provided in embodiments of this application by using a vehicle control apparatus as an execution body. The vehicle control apparatus may be, for example, the vehicle control system 110 in FIG. 1.

In some embodiments, the vehicle control apparatus may alternatively be the cockpit control system 140 in FIG. 1.

The vehicle control apparatus may be implemented as a component in the vehicle, for example, a chip, a chip system, or another functional module that can invoke a program and execute the program. Provided that a program recording code of the method provided in embodiments of this application can be run to implement the method provided in embodiments of this application, the vehicle control apparatus may be used as an execution body of the method provided in embodiments of this application.

FIG. 2 is a schematic flowchart of a vehicle control method 200 according to an embodiment of this application. As shown in FIG. 2, the method 200 may include S210 and S220.

S210: Determine a first level threshold of a vehicle based on a first running parameter of the vehicle.

S220: When a battery level of the vehicle is less than the first level threshold, control an electricity generation apparatus of the vehicle to generate electricity.

The first running parameter includes at least one of an energy replenishment parameter and a temperature parameter.

The energy replenishment parameter may indicate a parameter related to energy replenishment of the vehicle. For example, the energy replenishment parameter indicates at least one of an energy replenishment frequency and an energy replenishment amount of the vehicle. It should be noted that the energy replenishment may include but is not limited to: level replenishment and/or fuel replenishment. The level replenishment indicates that level replenishment is performed on the vehicle through a power grid system, that is, does not include level replenishment implemented by an engine that drives a generator under range-extended control. The fuel replenishment may be, for example, fuel oil or methane replenishment in a range-extended vehicle.

When the energy replenishment is level replenishment, the energy replenishment parameter includes a level replenishment parameter, and the level replenishment parameter indicates at least one of a level replenishment frequency and a level replenishment amount of the vehicle. When the energy replenishment is fuel replenishment, the energy replenishment parameter includes a fuel replenishment parameter, and the fuel replenishment parameter indicates at least one of a fuel replenishment frequency and a fuel replenishment amount of the vehicle.

The energy replenishment frequency in the energy replenishment parameter may be an energy replenishment frequency in any period of time or a plurality of periods of discontinuous time, any segment of a traveling range or a plurality of segments of discontinuous traveling ranges, or any N continuous or discontinuous driving cycles in a traveling process before a current moment, where N is a positive integer. To make the first level threshold determined based on the energy replenishment frequency more accurate, the energy replenishment frequency may be determined based on a historical record that is close to the current moment. For example, the energy replenishment frequency may be an energy replenishment frequency of one week before the current moment, an energy replenishment frequency of latest 500 kilometers, or an energy replenishment frequency in latest N continuous driving cycles. Certainly, in this application, it is not excluded that the energy replenishment frequency is determined based on a quantity of all energy replenishment times historically recorded before the current moment. An energy replenishment amount threshold is similar, and details are not described again. The driving cycle may be a process from ignition, operation, to shutdown of the vehicle, or the driving cycle may be a process from power-on to power-off of the vehicle.

The energy replenishment parameter reflects a vehicle use behavior of a user. The first level threshold is determined based on the energy replenishment parameter, so that the first level threshold can change as the vehicle use behavior of the user changes to avoid a situation in which range-extended control is performed based on a fixed level threshold, and consequently, power performance and vehicle use economy of the vehicle cannot match a user requirement.

The temperature parameter indicates a temperature at which the vehicle runs, for example, an ambient temperature detected by using a temperature sensor when the vehicle runs, or a battery (for example, a cell) temperature detected by using the temperature sensor.

Similar to the energy replenishment parameter, the temperature parameter may also indicate an ambient temperature and/or a battery temperature detected by the vehicle in any period of time or a plurality of periods of discontinuous time, any segment of a traveling range or a plurality of segments of discontinuous traveling ranges, or any N continuous or discontinuous driving cycles in which the vehicle travels before the current moment. To make the first level threshold determined based on the temperature parameter more accurate, the used temperature parameter may be a historical record that is close to the current moment. For example, the temperature parameter may be a temperature parameter of one week before the current moment, a temperature parameter of latest 300 kilometers, or a temperature parameter in latest N continuous driving cycles. Certainly, in this application, it is not excluded that the temperature parameter is determined based on all ambient temperatures and/or all battery temperatures historically recorded before the current moment.

The temperature parameter reflects a traveling environment of the vehicle. The first level threshold is determined based on the temperature parameter, so that the first level threshold can change as the traveling environment changes to avoid a situation in which range-extended control is performed based on a fixed level threshold, and consequently, power performance and vehicle use economy of the vehicle cannot match the traveling environment.

In S210, a vehicle control apparatus may determine the first level threshold of the vehicle in each interval. That is, the determined first level threshold takes effect in a current interval, to dynamically adjust the level threshold of the vehicle. The interval may be a time interval, for example, 10 minutes, one day, one week, or 15 days; or the interval may be a range interval, for example, 10 kilometers, 100 kilometers, or 500 kilometers; or the interval may be N' driving cycles, where N' is a positive integer.

In S220, the electricity generation apparatus of the vehicle may be, for example, the engine and the generator in FIG. 1. With reference to FIG. 1, the vehicle control system 110 may send a control instruction to the range-extended system 120 when the battery level of the vehicle is less than the first level threshold, and the range-extended system 120 controls, based on the control instruction, the engine to drive the generator to generate electricity, so that the battery level is maintained at the first level threshold; or the vehicle control system 110 may send a control instruction to the range-extended system 120, where the control instruction carries the battery level and the first level threshold, and the range-extended system 120 controls the electricity generation apparatus of the vehicle to generate electricity when the battery level is less than the first level threshold.

Therefore, in this embodiment of this application, the level threshold of the vehicle is adjusted based on the running parameter reflecting a vehicle use habit of the user or the traveling environment of the vehicle, so that power performance and vehicle use economy of the vehicle meet the user requirement or match a current traveling environment.

As described above, the energy replenishment may include the level replenishment and/or the fuel replenishment; and correspondingly, the energy replenishment parameter includes the level replenishment parameter and/or the fuel replenishment parameter.

For ease of understanding, a negative correlation and a positive correlation below are first described.

The negative correlation (negative correlation) means that two variables change in different directions. When one variable changes from large to small (or from small to large), the other variable changes from small to large (or from large to small). That the first level threshold is in a negative correlation with the level replenishment parameter of the vehicle below means that a larger level replenishment parameter of the vehicle corresponds to a smaller first level threshold.

Correspondingly, the positive correlation (positive correlation) means that two variables change in a same direction. When one variable changes from large to small (or from small to large), the other variable also changes from large to small (or from small to large). That the first level threshold is in a positive correlation with the fuel replenishment parameter of the vehicle below means that a larger fuel replenishment parameter of the vehicle corresponds to a larger first level threshold.

In a first optional example, the first level threshold is in a negative correlation with the level replenishment parameter of the vehicle. It should be noted that a higher level replenishment frequency indicates that the user has a higher tendency to use a pure electric endurance range of the vehicle, to improve economy of the vehicle or facilitate charging of the vehicle by the user. In this case, regardless of a vehicle use economy requirement of the user or the vehicle use habit of the user, the first level threshold is in a negative correlation with the level replenishment frequency, so that vehicle use economy can be improved, and range-extended control can match the user. For the same consideration, the level replenishment amount is in a negative correlation with the first level threshold.

In a second optional example, the first level threshold is in a positive correlation with the fuel replenishment parameter of the vehicle. It should be noted that a higher fuel replenishment frequency indicates that the user has a higher tendency to use a fuel oil endurance range of the vehicle, or has a higher power performance requirement of the vehicle. In this case, in consideration of a vehicle use habit of the user and power performance of the vehicle, the first level threshold is in a positive correlation with the fuel replenishment frequency, so that power performance of the vehicle can be improved, and range-extended control can match the user. For the same consideration, the fuel replenishment amount is in a positive correlation with the first level threshold.

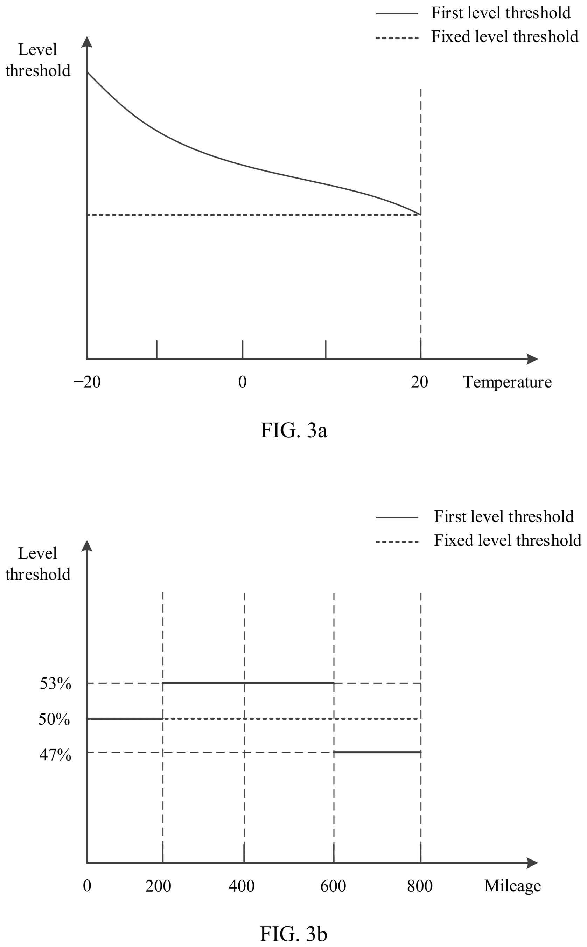

In a third optional example, the first level threshold is in a negative correlation with the temperature parameter of the vehicle. With reference to FIG. 3a, between -20 degrees Celsius and 20 degrees Celsius, the first level threshold decreases as the ambient temperature or the battery temperature increases. In comparison with a case in which the level threshold is a fixed level threshold, in this application, the first level threshold may decrease as the temperature increases. It should be noted that a lower ambient temperature and/or a lower battery temperature of the vehicle indicate/indicates a higher level that needs to be consumed by the vehicle to resist a low temperature. If the first level threshold is set to a small value, power performance of the vehicle is greatly affected. Therefore, when the temperature is lower, the first level threshold is higher. This may match a current traveling environment of the vehicle.

The three optional examples may be combined with each other, to determine the first level threshold. For example, a weighting operation is performed on the level replenishment parameter, the fuel replenishment parameter, and the temperature replenishment parameter, to determine the corresponding first level threshold.

In any one of the foregoing embodiments, the first running parameter may be a running parameter of the vehicle in a first adjustment phase, an interval to which the determined first level threshold is applicable may be a second adjustment phase, the first adjustment phase is earlier than the second adjustment phase, and the first adjustment phase and the second adjustment phase may be continuous or discontinuous. This is not limited in this application. The vehicle travels a first preset range in the first adjustment phase, or the vehicle travels for first preset duration in the first adjustment phase, or the vehicle performs N driving cycles in the first adjustment phase.

In an example of S210, the vehicle control apparatus may determine a first level threshold in a second adjustment phase based on an energy replenishment parameter of the vehicle in the first adjustment phase, and perform range-extended control in the second adjustment phase based on the first level threshold. The second adjustment phase and the first adjustment phase may be a same traveling range, same traveling duration, or a same quantity of driving cycles. However, this is not limited in this application. The second adjustment phase may be an adjustment phase that is totally different from the first adjustment phase. For example, traveling duration in the second adjustment phase is shorter than that in the first adjustment phase, or a traveling range in the second adjustment phase is longer than that in the first adjustment phase.

The following separately describes how to determine the first level threshold in three possible manners: The first running parameter includes the energy replenishment parameter; the first running parameter includes the temperature parameter; and the first running parameter includes the energy replenishment parameter and the temperature parameter.

In a first manner, the vehicle control apparatus determines the first level threshold based on the energy replenishment parameter of the vehicle.

In the first manner, to reduce processing efficiency of determining the first level threshold and simplify a processing process, a traveling process of the vehicle may be divided into a plurality of adjustment phases (for example, including the first adjustment phase and the second adjustment phase), and a level threshold in a current adjustment phase (for example, the second adjustment phase) is determined based on a running parameter in a previous adjustment phase (for example, the first adjustment phase).

For example, the vehicle control apparatus may determine the first level threshold in the second adjustment phase from a first correspondence based on the energy replenishment parameter in the first adjustment phase. The first correspondence is a correspondence between the level threshold and a value of the energy replenishment parameter.

In a first example of the first correspondence, a plurality of level thresholds are in a one-to-one correspondence with values of a plurality of level replenishment parameters, and the vehicle control apparatus may search the first correspondence for a level threshold corresponding to a value of a level replenishment parameter in the first adjustment phase, namely, the first level threshold in the second adjustment phase. Optionally, in the first correspondence, a correspondence between a level threshold and a level replenishment parameter may be set according to a negative correlation rule. That is, a larger level replenishment parameter corresponds to a smaller level threshold.

In a second example of the first correspondence, a plurality of level thresholds are in a one-to-one correspondence with a plurality of fuel replenishment parameters, and the vehicle control apparatus may search the first correspondence for a level threshold corresponding to a fuel replenishment parameter in the first adjustment phase, namely, the first level threshold in the second adjustment phase. Optionally, in the first correspondence, a correspondence between a level threshold and a fuel replenishment parameter may be set according to a positive correlation rule. That is, a larger fuel replenishment parameter corresponds to a smaller level threshold.

In a third example of the first correspondence, each of a plurality of level thresholds corresponds to one level replenishment parameter and one fuel replenishment parameter, and the vehicle control apparatus may search the first correspondence for a level threshold corresponding to both a level replenishment parameter and a fuel replenishment parameter in the first adjustment phase, namely, the first level threshold in the second adjustment phase.

Based on the three first correspondences, the correspondence between the energy replenishment parameter and the level threshold in the first correspondence may be replaced with a correspondence between an interval (for example, a frequency interval and/or an energy interval) and the level threshold.

Example 1: The vehicle control apparatus determines the first level threshold in the second adjustment phase based on a first frequency interval in which an energy replenishment frequency of the vehicle in the first adjustment phase falls. M₁ preset frequency intervals include the first frequency interval, M₁ is a positive integer, and the M₁ preset frequency intervals are in a one-to-one correspondence with M₁ preset thresholds.

Example 2: The vehicle control apparatus determines the first level threshold in the second adjustment phase based on a first energy interval in which an energy replenishment amount of the vehicle in the first adjustment phase falls. M₂ preset energy intervals include the first energy interval, M₂ is a positive integer, and the M₂ preset frequency intervals are in a one-to-one correspondence with M₂ preset thresholds.

Example 3: The vehicle control apparatus determines a first candidate threshold based on a first frequency interval in which an energy replenishment frequency of the vehicle in the first adjustment phase falls, determines a second candidate threshold based on a first energy interval in which an energy replenishment amount of the vehicle in the first adjustment phase falls, and then determines the first level threshold based on the first candidate threshold and the second candidate threshold. For example, a larger value between the first candidate threshold and the second candidate threshold is determined as the first level threshold, or a smaller value between the first candidate threshold and the second candidate threshold is determined as the first level threshold, or a weighting operation is performed on the first candidate threshold and the second candidate threshold to obtain the first level threshold.

In Example 4 and Example 5 below, the vehicle control apparatus may first determine a level maintenance adjustment amount in the second adjustment phase based on the capability replenishment parameter in the first adjustment phase, and then adjust a first level threshold in the first adjustment phase based on the level maintenance adjustment amount in the second adjustment phase, to obtain the first level threshold in the second adjustment phase. For example, a sum (or a product) of the first level threshold in the first adjustment phase and the level maintenance adjustment amount is determined as the first level threshold. The level maintenance adjustment amount may be a positive value or a negative value.

Example 4: The vehicle control apparatus determines the level maintenance adjustment amount in the second adjustment phase based on a second frequency interval in which an energy replenishment frequency of the vehicle in the first adjustment phase falls. M₃ preset frequency intervals include the second frequency interval, M₃ is a positive integer, and the M₃ preset frequency intervals are in a one-to-one correspondence with M₃ level maintenance adjustment amounts.

Example 5: The vehicle control apparatus determines the level maintenance adjustment amount in the second adjustment phase based on a second energy interval in which an energy replenishment amount of the vehicle in the first adjustment phase falls. M₄ preset energy intervals include the second energy interval, M₄ is a positive integer, and the M₄ preset frequency intervals are in a one-to-one correspondence with M₄ level maintenance adjustment amounts.

Example 6: The vehicle control apparatus determines a first level maintenance adjustment amount based on a second frequency interval in which an energy replenishment frequency of the vehicle in the first adjustment phase falls, determines a second level maintenance adjustment amount based on a second energy interval in which an energy replenishment amount of the vehicle in the first adjustment phase falls, and determines the level maintenance adjustment amount in the second adjustment phase based on the first level maintenance adjustment amount and the second level maintenance adjustment amount. For example, a larger value between the first level maintenance adjustment amount and the second level maintenance adjustment amount is determined as the level maintenance adjustment amount in the second adjustment phase, or a smaller value between the first level maintenance adjustment amount and the second level maintenance adjustment amount is determined as the level maintenance adjustment amount in the second adjustment phase, or a weighting operation is performed on the first level maintenance adjustment amount and the second level maintenance adjustment amount to obtain the level maintenance adjustment amount in the second adjustment phase.

The first level threshold may be represented as a proportion value, and the proportion value is a proportion of a level required for maintaining the vehicle to a battery capacity. For example, if the first level threshold is 50%, it indicates that the electricity generation apparatus of the vehicle is controlled to generate electricity when the battery level of the vehicle is less than 50% of the battery capacity. Similarly, the level maintenance adjustment amount may also be represented as a proportion value. For example, if a level threshold in the first adjustment phase is 50%, and the level maintenance adjustment amount is 5%, the first level threshold in the second adjustment phase is 55%.

For example, it is assumed that an adjustment phase is obtained through division based on a traveling range of every 200 kilometers (which may be replaced with 100 kilometers, 500 kilometers, 1000 kilometers, or the like). If a level replenishment frequency of the vehicle in the first adjustment phase is zero times of charging at a distance of 200 kilometers, it is determined that a first level maintenance adjustment amount in the second adjustment phase is 3%. If a level replenishment frequency of the vehicle in the first adjustment phase is one to three times of charging at a distance of 200 kilometers, it is determined that a first level maintenance adjustment amount in the second adjustment phase is 0. If a level replenishment frequency of the vehicle in the first adjustment phase is four to five times of charging at a distance of 200 kilometers, it is determined that a first level maintenance adjustment amount in the second adjustment phase is - 3%. If a level replenishment frequency of the vehicle in the first adjustment phase is more than five times of charging at a distance of 200 kilometers, it is determined that a first level maintenance adjustment amount in the second adjustment phase is -6%.

With reference to FIG. 3b, the vehicle implements range-extended control at a level threshold of 50% within 0 km to 200 km. If charging is performed zero times within 0 km to 200 km, the level threshold is adjusted to 53% within 200 km to 400 km, and range-extended control is implemented at the level threshold of 53%. If charging is performed one to three times within 200 km to 400 km, the level threshold remains unchanged within 400 km to 600 km, and range-extended control is still implemented at the level threshold of 53%. If charging is performed more than five times within 400 km to 600 km, the level threshold is 47% within 600 km to 800 km.

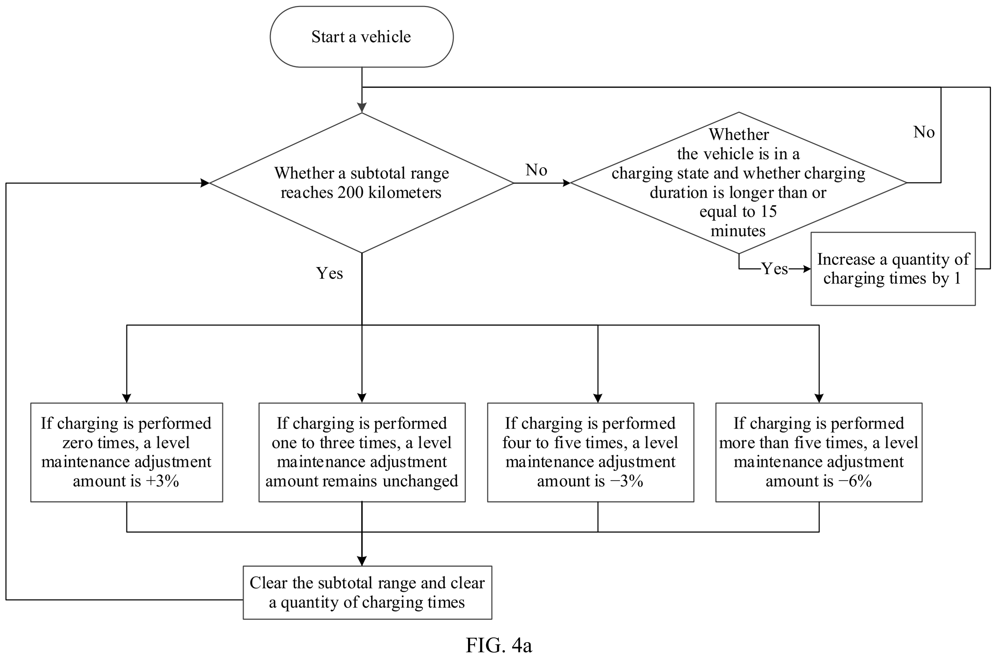

Still take an example in which an adjustment phase is obtained through division based on a traveling range of 200 kilometers. With reference to FIG. 4a, after the vehicle is started, the vehicle control apparatus detects whether a subtotal range of the vehicle reaches 200 kilometers. When the subtotal range of the vehicle reaches 200 kilometers, a quantity of charging times of the vehicle within the traveling range of 200 kilometers is determined. For example, if charging is performed zero times, a level maintenance adjustment amount of the vehicle in a next adjustment phase is 3%. If charging is performed one to three times, a level maintenance adjustment amount of the vehicle in a next adjustment phase is 0. If charging is performed four to five times, a level maintenance adjustment amount of the vehicle in a next adjustment phase is -3%. If charging is performed more than five times, a level maintenance adjustment amount of the vehicle in a next adjustment phase is -6%. A level maintenance value in the next adjustment phase is further determined based on the level adjustment amount, and the vehicle control apparatus clears the subtotal range and the quantity of charging times. Further, whether a subtotal range of the vehicle reaches 200 kilometers continues to be detected, and the process of adjusting the level maintenance value is repeated. When the subtotal range of the vehicle does not reach 200 kilometers, a quantity of charging times of the vehicle is detected. For example, when it is determined that the vehicle is in a charging state and charging duration is longer than or equal to 15 minutes, the quantity of charging times is increased by 1. Otherwise, the quantity of charging times remains unchanged, and whether the subtotal range of the vehicle reaches 200 kilometers continues to be detected.

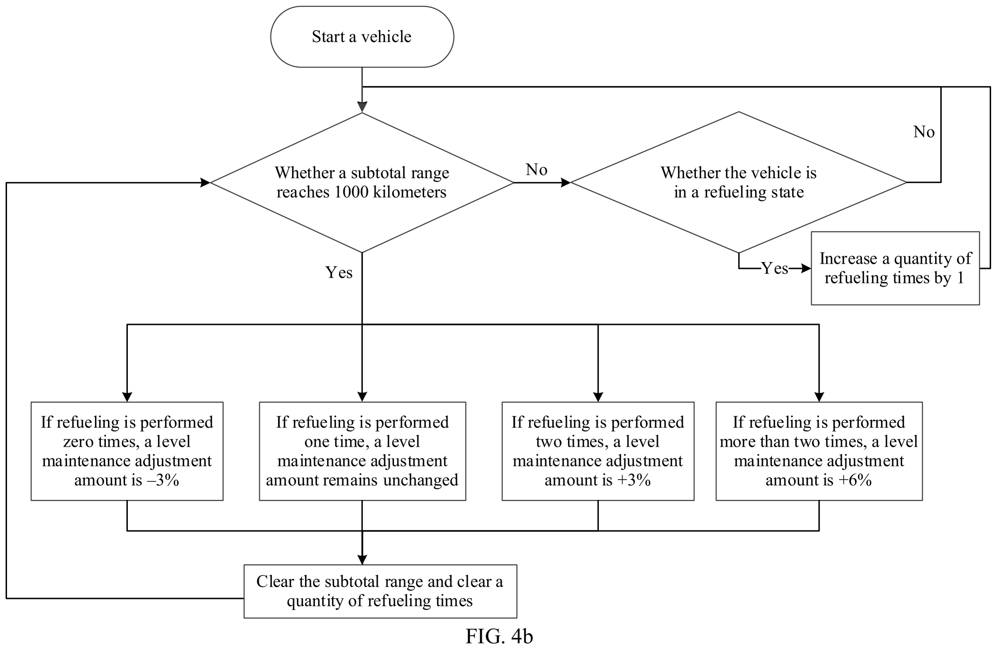

With reference to FIG. 4b, after the vehicle is started, the vehicle control apparatus detects whether a subtotal range of the vehicle reaches 1000 kilometers. When the subtotal range of the vehicle reaches 1000 kilometers, a quantity of refueling times of the vehicle within a traveling range of 1000 kilometers is determined. For example, if refueling is performed zero times, a level maintenance adjustment amount of the vehicle in a next adjustment phase is -3%. If refueling is performed one time, a level maintenance adjustment amount of the vehicle in a next adjustment phase is 0. If refueling is performed two times, a level maintenance adjustment amount of the vehicle in a next adjustment phase is 3%. If refueling is performed more than two times, a level maintenance adjustment amount of the vehicle in a next adjustment phase is 6%. A level maintenance value in the next adjustment phase is further determined based on the level adjustment amount, and the vehicle control apparatus clears the subtotal range and the quantity of refueling times. Further, whether a subtotal range of the vehicle reaches 1000 kilometers continues to be detected, and the process of adjusting the level maintenance value is repeated. When the subtotal range of the vehicle does not reach 1000 kilometers, refueling detection is performed on the vehicle. For example, when it is determined that the vehicle is in a refueling state, the quantity of refueling times is increased by 1. Otherwise, the quantity of refueling times remains unchanged, and whether the subtotal range of the vehicle reaches 1000 kilometers continues to be detected.

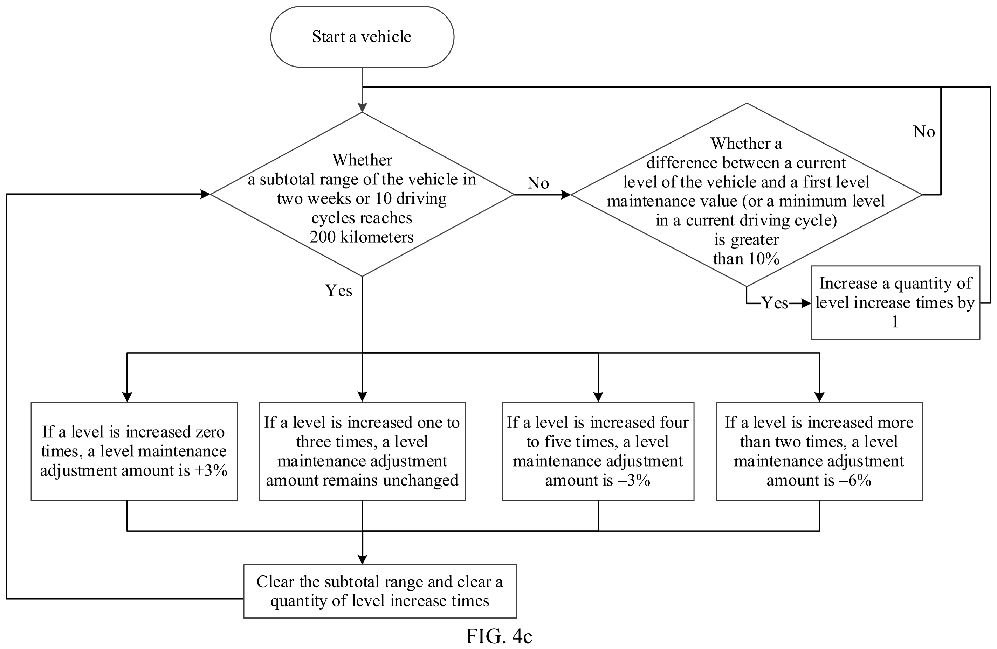

With reference to FIG. 4c, after the vehicle is started, the vehicle control apparatus detects whether a subtotal range of the vehicle in two weeks or 10 driving cycles reaches 200 kilometers. When the subtotal range in the two weeks or the 10 driving cycles reaches 200 kilometers, a quantity of level increase times of the vehicle in a traveling range of 200 kilometers is determined. For example, if the level is increased zero times, a level maintenance adjustment amount of the vehicle in a next adjustment phase is 3%. If the level is increased one to three times, a level maintenance adjustment amount of the vehicle in a next adjustment phase is 0. If the level is increased four to five times, a level maintenance adjustment amount of the vehicle in a next adjustment phase is -3%. If the level is increased more than five times, a level maintenance adjustment amount of the vehicle in a next adjustment phase is -6%. A level maintenance value in the next adjustment phase is further determined based on the level adjustment amount, and the vehicle control apparatus clears the subtotal range and the quantity of level increase times. Further, whether a subtotal range of the vehicle in two weeks or 10 driving cycles reaches 200 kilometers continues to be detected, and the process of adjusting the level maintenance value is repeated. When the subtotal range in the two weeks or the 10 driving cycles does not reach 200 kilometers, the vehicle control apparatus determines whether a difference between a current level of the vehicle and a first level maintenance value (or a minimum level in a current driving cycle) is greater than a preset level difference (for example, 10%). When the difference between the current level of the vehicle and the first level maintenance value (or the minimum level in the current driving cycle) is greater than the preset level difference (for example, 10%), the quantity of level increase times is increased by 1. Otherwise, the quantity of level increase times remains unchanged, and whether the subtotal range of the vehicle in the two weeks or the 10 driving cycles reaches 200 kilometers continues to be detected.

Therefore, according to embodiments provided in this application, flexibility and accuracy of the method for adjusting the level maintenance value can be improved, and a requirement of the vehicle use habit of the user can be better met.

In some embodiments of the first manner, the vehicle control apparatus may adjust the first level threshold in the second adjustment phase based on the pure electric endurance range or the fuel endurance range in the energy replenishment parameter of the vehicle in the first adjustment phase. It should be noted that the pure electric endurance range of the vehicle in the energy replenishment parameter in the first adjustment phase may be a pure electric endurance range of the vehicle at the level replenishment frequency in the first adjustment phase, for example, may be a pure electric endurance range after the vehicle is charged for two times in the first adjustment phase, or may be a pure electric endurance range of the vehicle at a level replenishment amount in the first adjustment phase, or may be a fuel endurance range of the vehicle at a fuel replenishment frequency in the first adjustment phase, or may be a fuel endurance range of the vehicle at a fuel replenishment amount in the first adjustment phase.

For example, the pure electric endurance range of the vehicle at the level replenishment frequency or the level replenishment amount in the first adjustment phase is greater than a first range and a difference between the pure electric endurance range and the first range is greater than a preset range. In this case, the user has a higher tendency to use the pure electric endurance range of the vehicle, to improve economy of the vehicle or to facilitate charging of the vehicle by the user. To match the user, the first level threshold in the second adjustment phase may be less than the level threshold in the first adjustment phase, that is, the level threshold in the first adjustment phase is adjusted to a smaller value, to obtain the first level threshold in the second adjustment phase.

The first range may be the first preset range in the foregoing example, or may be a predicted value of a traveling range of the vehicle in the first preset duration.

The first range may be preset, or may be configured based on an input of the user. Configuration performed based on the input of the user improves configuration flexibility and is closer to the user requirement.

Corresponding to the foregoing example, the fuel endurance range of the vehicle at the fuel replenishment frequency or the fuel replenishment amount in the first adjustment phase is less than the first range and a difference between the fuel endurance range and the first range is greater than the preset range, and the first level threshold in the second adjustment phase is less than a level maintenance value in the first adjustment phase.

For example, the pure electric endurance range of the vehicle at the level replenishment frequency or the level replenishment amount in the first adjustment phase is equal to the first range or a difference between the pure electric endurance range and the first range is less than the preset range. In this case, the first level threshold in the second adjustment phase is consistent with the level threshold in the first adjustment phase.

Correspondingly, the fuel endurance range of the vehicle at the fuel replenishment frequency or the fuel replenishment amount in the first adjustment phase is equal to the first range or a difference between the fuel endurance range and the first range is less than a second preset value, and the first level threshold in the second adjustment phase is equal to the first level threshold in the first adjustment phase.

For example, the pure electric endurance range of the vehicle at the level replenishment frequency or the level replenishment amount in the first adjustment phase is less than the first range and a difference between the pure electric endurance range and the first range is greater than a preset level. In this case, the user does not tend to use the pure electric endurance range of the vehicle, or it is inconvenient for the user to charge the vehicle. To avoid impact of a low level on power performance of the vehicle, the first level threshold in the second adjustment phase is greater than the level threshold in the first adjustment phase.

Correspondingly, the fuel endurance range of the vehicle at the fuel replenishment frequency or the fuel replenishment amount in the first adjustment phase is greater than the first range and a difference between the fuel endurance range and the first range is greater than the second preset value, and a level maintenance value in the second adjustment phase is greater than a level maintenance value in the first adjustment phase.

It should be noted that the energy replenishment frequency may be detected by the vehicle control apparatus. For example, in the first adjustment phase, the vehicle control apparatus detects whether the vehicle is in an energy replenishment state (for example, a charging state or a refueling state), and detects duration (namely, energy replenishment duration) during which the vehicle is in the energy replenishment state. When the energy replenishment duration is longer than preset energy replenishment duration (for example, 10 minutes, 15 minutes, 30 minutes, or 1 hour), a quantity of energy replenishment times is increased by 1.

The quantity of energy replenishment times is accumulated when the energy replenishment duration is longer than the preset energy replenishment duration. This avoids a situation in which some energy replenishment processes with excessively short time are identified as one time of energy replenishment, implements noise filtering, and improves accuracy of user preference identification. Optionally, the energy replenishment frequency is initialized in a next adjustment phase, so that it is convenient to start to detect an energy replenishment frequency in the next adjustment phase.

In some embodiments, the level replenishment frequency of the vehicle may be determined based on the battery level of the vehicle. For example, the battery level of the vehicle is maintained at a second level threshold (for example, 20%) (or the battery level of the vehicle is less than the second level threshold, or a difference between the battery level of the vehicle and the second level threshold is less than or equal to a first preset value) in a level replenishment frequency detection phase. In this case, it indicates that the vehicle is not charged in the level replenishment frequency detection phase, and it is determined that the level replenishment frequency of the vehicle is 0. The level replenishment frequency detection phase may be the first adjustment phase.

In the foregoing examples, detecting the energy replenishment frequency in the first adjustment phase is used as an example, but the foregoing detection process is not limited to being applicable only to a scenario of segmental adjustment, and is also applicable to a real-time dynamic adjustment process.

In a second manner, the vehicle control apparatus determines the first level threshold based on the temperature parameter.

In the second manner, the temperature parameter may be used to detect a temperature at which the vehicle runs in a first detection interval. The first detection interval may be an interval in which the vehicle runs N driving cycles, where N is a positive integer, or an interval in which the vehicle runs for second preset duration.

For example, the temperature parameter may be a minimum ambient temperature or a minimum battery (for example, a cell) temperature at which the vehicle runs in the first detection interval. Certainly, this is not limited in this application. For example, the temperature parameter may alternatively be an average value or a maximum value of an ambient temperature or a battery temperature at the vehicle runs in the first detection interval. In some embodiments, the temperature parameter in the first detection interval may alternatively be a lower value or a higher value between the minimum ambient temperature and the minimum battery temperature, or an average value of the minimum ambient temperature and the minimum battery temperature.

For example, the vehicle control apparatus may detect, in each driving cycle, an ambient temperature or a battery temperature at which the vehicle runs, and record a minimum ambient temperature or a minimum battery temperature in the driving cycle. It is assumed that the vehicle runs five driving cycles in the first detection interval. In this case, the vehicle control apparatus may use a minimum ambient temperature or a minimum battery temperature in temperatures recorded in the five driving cycles as a value of the temperature parameter in the first detection interval.

In an implementation of the second manner, the vehicle control apparatus may determine the first level threshold from a second correspondence based on the temperature parameter in the first detection interval. The second correspondence is a correspondence between a temperature parameter and a level threshold. For example, in the second correspondence, values of a plurality of temperature parameters are in a one-to-one correspondence with a plurality of level thresholds. The vehicle control apparatus may search the second correspondence for a level threshold corresponding to a value of the temperature parameter in the first detection interval, namely, the first level threshold. Optionally, in the second correspondence, the level threshold corresponding to the value of the temperature parameter may be greater than or equal to a first battery level. The first battery level may be a minimum level required for a battery to provide a first discharge power at the value of the temperature parameter (for example, a first temperature), and the first discharge power has a capability of driving the vehicle. A minimum power (namely, the first discharge power) at which the battery drives the vehicle to travel at the first temperature may be determined based on a worldwide light-duty test procedure (Worldwide Light-duty Test Procedure, WLTP).

In another implementation of the second manner, the vehicle control apparatus may determine the first level threshold of the vehicle based on a first temperature interval in which a minimum ambient temperature at which the vehicle runs in the first detection interval falls; or may determine the first level threshold of the vehicle based on a second temperature interval in which a minimum battery temperature at which the vehicle runs in the first detection interval falls; or may determine a third candidate threshold based on a first temperature interval in which a minimum ambient temperature at which the vehicle runs in the first detection interval falls, determine a fourth candidate threshold based on a second temperature interval in which a minimum battery temperature at which the vehicle runs in the first detection interval falls, and then determine the first level threshold of the vehicle based on the third candidate threshold and the fourth candidate threshold. Both the first temperature interval and the second temperature interval are included in L preset temperature intervals, L is a positive integer, and the L preset temperature intervals are in a one-to-one correspondence with L first level thresholds. The first temperature interval and the second temperature interval may be the same or may be different. This is not limited in this application.

Optionally, the vehicle control apparatus may use a larger candidate threshold between the third candidate threshold and the fourth candidate threshold as the first level threshold, or use a smaller candidate threshold between the third candidate threshold and the fourth candidate threshold as the first level threshold, or perform a weighting operation on the third candidate threshold and the fourth candidate threshold to obtain the first level threshold.

In the second manner, a difference in detection time of a minimum temperature or a minimum ambient temperature in any two adjacent driving cycles in the N driving cycles is less than or equal to a preset time difference, and the preset time difference may be, for example, five days, 10 days, or 30 days. As time moves, the ambient temperature may change greatly. If an ambient temperature or a battery temperature that is recorded earlier is still used to determine the first level threshold, accuracy of the first level threshold may be affected.

In some embodiments, if a difference between time when a value of a temperature parameter is recorded in a previous driving cycle and current time is greater than a preset time difference, the vehicle control apparatus uses a current temperature as a temperature recorded in a 1^{st} driving cycle, stores time when the current temperature is recorded, and restores temperatures recorded in the remaining four driving cycles to invalid values (for example, 100 degrees Celsius).

In a third manner, the vehicle control apparatus determines the first level threshold based on the energy replenishment parameter and the temperature parameter.

In the second manner, the vehicle control apparatus determines a fifth candidate threshold of the vehicle based on the energy replenishment parameter of the vehicle, and determines a sixth candidate threshold of the vehicle based on the temperature parameter; and further determines the first level threshold of the vehicle based on the fifth candidate threshold and the sixth candidate threshold.

For example, the first level threshold of the vehicle may be a larger value between the fifth candidate threshold and the sixth candidate threshold. Certainly, this is not limited in this application. For example, the first level threshold may be a smaller value between the fifth candidate threshold and the sixth candidate threshold, or the first level threshold may be obtained by performing a weighting operation on the fifth candidate threshold and the sixth candidate threshold.

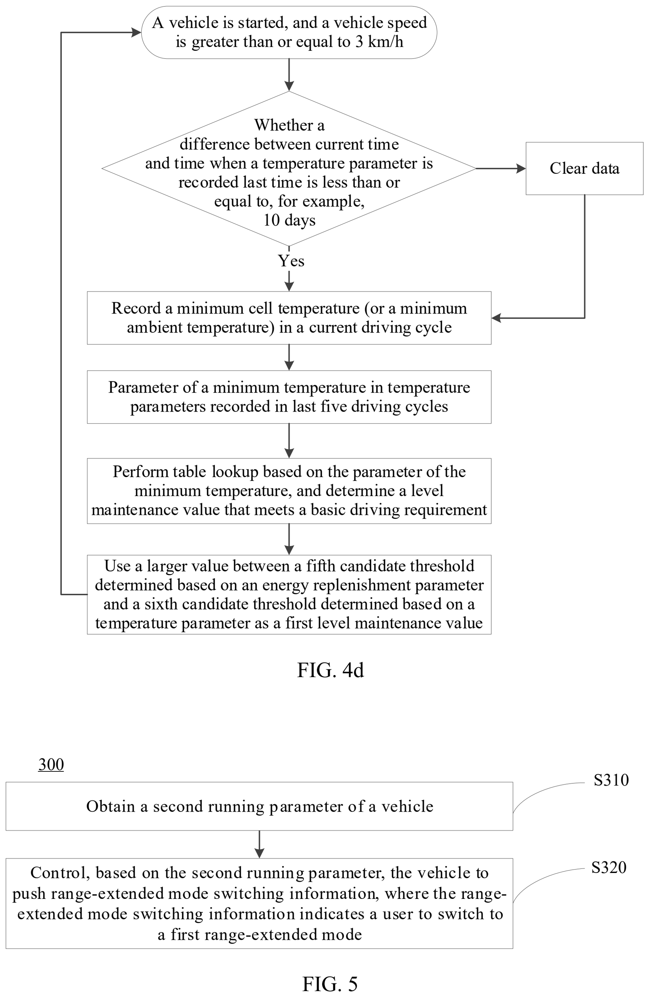

For example, with reference to FIG. 4d, when the vehicle is started and a vehicle speed is greater than or equal to a preset vehicle speed (for example, 3 kilometers per hour (km/h)), the vehicle control apparatus determines whether a difference between current time and time when a temperature parameter is recorded last time is less than or equal to preset time (for example, 10 days). When the difference between the current time and the time when the temperature parameter is recorded last time is less than or equal to the preset time, a minimum cell temperature (or a minimum ambient temperature) in a current driving cycle is recorded. When the difference between the current time and the time when the temperature parameter is recorded last time is greater than the preset time, data of previously recorded temperature parameters is cleared, and then a minimum cell temperature (or a minimum ambient temperature) in a current driving cycle is recorded again. Further, a parameter of a minimum temperature in temperature parameters recorded in last five driving cycles is determined, table lookup is performed based on the parameter of the minimum temperature, a level maintenance value that meets a basic driving requirement is determined, and a larger value between the fifth candidate threshold determined based on the energy replenishment parameter and the sixth candidate threshold determined based on the temperature parameter is used as a first level maintenance value.

The solution of adjusting the first level threshold based on the first running parameter of the vehicle may be implemented as a mode. For example, a first mode below may be referred to as an intelligent range-extended mode in some examples. In the first mode, the vehicle control apparatus may dynamically adjust the first level threshold based on the first running parameter, to perform range-extended control based on a dynamic first level threshold. In a second mode (for example, a fuel oil priority mode) or a third mode (for example, a pure electric priority mode), the vehicle control apparatus still performs range-extended control based on a fixed level threshold. To make power performance and vehicle use economy of the vehicle to match the user to learn a vehicle use environment, an embodiment of this application provides a mode-based intelligent switching solution. The following provides an example description with reference to FIG. 5.

FIG. 5 is a schematic flowchart of a vehicle control method according to an embodiment of this application. As shown in FIG. 5, the method 300 includes the following steps.

S310: Obtain a second running parameter of a vehicle, where the second running parameter includes at least one of an energy replenishment parameter, a traveling frequency, and a temperature parameter, the energy replenishment parameter indicates an energy replenishment frequency and/or an energy replenishment amount of the vehicle, and the temperature parameter indicates a temperature at which the vehicle runs.

S320: Control, based on the second running parameter, the vehicle to push mode switching information, where the mode switching information indicates a user to switch to a first mode.

It should be noted that, regardless of a current mode, a vehicle control apparatus may continuously perform a process of determining the first level threshold based on the first running parameter in any one of the foregoing embodiments. However, in a non-first mode, the first level threshold is not used for execution of range-extended control.

The energy replenishment parameter in the second running parameter and the energy replenishment parameter in the first running parameter may be determined in different time intervals, or may be determined in different range intervals, or may be determined in different driving cycles. Certainly, it is not excluded that the energy replenishment parameter in the second running parameter and the energy replenishment parameter in the first running parameter may be determined in a same time interval, a same range interval, or a same driving cycle.

A manner of obtaining the energy replenishment parameter and the temperature parameter is described in the foregoing embodiments, and details are not described herein again.

The traveling frequency may be determined by the vehicle control apparatus through a wheel speed sensor deployed in the vehicle. For example, the vehicle control apparatus detects that the vehicle is in a traveling state, and a traveling speed of the vehicle is greater than a preset traveling speed (for example, 3 km/h or 10 km/h). Based on this, a quantity of traveling times in sequence is accumulated, to collect statistics on a traveling frequency of the vehicle in an interval.

The second running parameter may reflect a vehicle use habit of the user or a traveling environment of the vehicle. Therefore, the second running parameter may be used to determine whether the current mode matches the vehicle use habit of the user or the traveling environment of the vehicle. If the current mode does not match the vehicle use habit or the traveling environment of the vehicle, the vehicle control apparatus may control the vehicle to push the mode switching information. For example, a vehicle control system obtains the second running parameter. In addition, when it is determined, based on the second running parameter, that the current mode does not match the vehicle use habit of the user or the traveling environment of the vehicle, the vehicle control system sends a push instruction to a cockpit control system. The push instruction indicates to push the mode switching information. The cockpit control system controls, based on the push instruction, an audio-visual entertainment system and/or a display system to push the mode switching information, for example, display the mode switching information through the display system, or play the mode switching information through the audio-visual entertainment system.

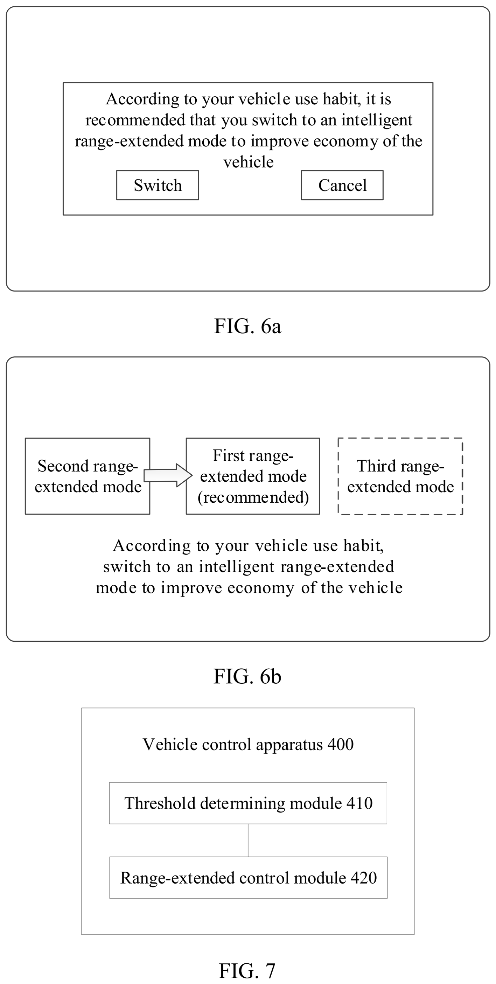

With reference to FIG. 6a, a display interface that presents the mode switching information may include a switching control. In response to a selection operation performed by the user on the switching control, the vehicle control apparatus may switch from the current mode (for example, a third mode) to the first mode. The display interface may further include a cancel control. In response to a selection operation performed by the user on the cancel control, the vehicle control apparatus maintains the current mode. In the example shown in FIG. 6a, the mode switching information is used to recommend the user to perform mode switching, and the user determines, according to a requirement of the user, whether to perform switching. In this case, the mode switching information may also be referred to as mode switching recommendation information.

With reference to FIG. 6b, a display interface that presents the mode switching information may include an information text (for example, "According to your vehicle use habit, switch to an intelligent mode to improve economy of the vehicle") or an image. The information text or the image is used to display as follows: The vehicle control apparatus has switched from the current mode (for example, a second mode) to the first mode.

A level threshold of the vehicle in the second mode is a first value, and the first value is greater than or equal to a first level threshold of the vehicle in the first mode. For example, the level threshold in the second mode may be 70%. A level threshold of the vehicle in the third mode is a second value, and the second value is less than or equal to the first level threshold of the vehicle in the first mode. For example, the second value may be 20%.

When the current mode is the second mode, in this embodiment of this application, whether to switch to the first mode may be determined based on the energy replenishment parameter. For example, when the energy replenishment parameter of the vehicle meets at least one of the following, the vehicle control apparatus determines that the second mode needs to be switched to the first mode, and the mode switching information indicates the user to switch from the second mode to the first mode:
a level replenishment frequency of the vehicle is greater than or equal to a preset level replenishment frequency;
a fuel replenishment frequency of the vehicle is less than or equal to a preset fuel replenishment frequency; and
the temperature parameter is greater than or equal to a preset temperature.

The level replenishment frequency of the vehicle may be a quantity of level replenishment times counted from time when the vehicle enables the second mode to current time. A higher level replenishment frequency indicates that the user has a higher tendency to improve vehicle use economy. In this case, the level threshold in the second mode does not match the vehicle use habit of the user. Therefore, the mode switching information may be pushed to indicate the user to switch from the second mode to the first mode. This improves vehicle use economy. For example, the audio-visual entertainment system may play a voice message "According to your vehicle use habit, it is recommended that you switch to an intelligent mode to improve economy of the vehicle".

The fuel replenishment frequency of the vehicle may also be a quantity of level replenishment times counted from the time when the vehicle enables the second mode to the current time. A lower fuel replenishment frequency indicates that the user has a higher tendency to improve vehicle use economy. In this case, the level threshold in the second mode does not match the vehicle use habit of the user. Therefore, the mode switching information may be pushed to indicate the user to switch from the second mode to the first mode. This improves vehicle use economy.

Similarly, the temperature parameter may be counted from the time when the vehicle enables the second mode to the current time. When a value of the temperature parameter is greater than the preset temperature, power performance of the vehicle is not affected due to a low-temperature environment (for example, an extreme-cold environment with a temperature below - 10 degrees Celsius). Therefore, the second mode may be switched to the first mode.

The level replenishment frequency, the fuel replenishment frequency, and the temperature parameter may be combined with each other to determine the mode switching information. For example, when the level replenishment frequency indicates that the quantity of level replenishment times from the time when the second mode is enabled to the current time is greater than or equal to 2, and the value of the temperature parameter is greater than or equal to - 10 degrees Celsius, the mode switching information indicates to switch from the second mode to the first mode.

When the current mode is the third mode, in this embodiment of this application, whether to switch to the first mode may be determined based on the traveling frequency. For example, when a quantity of traveling times of the vehicle in the third mode is greater than or equal to a preset quantity of traveling times (for example, five times or 10 times), the mode switching information indicates the user to switch from the third mode to the first mode. A preset mode of the vehicle may be the third mode (for example, a pure electric priority mode). When the vehicle travels in an initial mode for a quantity of times greater than the preset quantity of traveling times, it indicates that the vehicle may always travel in the initial mode because the user does not learn a mode. In this case, the mode switching information is pushed to the user, so that the user can select the first mode to intelligently adjust economy and power performance of the vehicle.

According to the foregoing examples, the vehicle control apparatus may determine the mode switching information based on a battery level of the vehicle. For example, when the quantity of traveling times of the vehicle in the third mode is greater than or equal to the preset quantity of traveling times (for example, five times or 10 times), and the battery level of the vehicle is always less than a first preset battery level (for example, 20% or 30%) in a current driving cycle (where the current driving cycle may be replaced with the third mode, a period of time, a segment of a range, or the like), the mode switching information indicates the user to switch from the third mode to the first mode. If the battery level of the vehicle is always low, it indicates that the user does not frequently charge the vehicle. In this case, if the vehicle continues to travel in the third mode, power performance of the vehicle is greatly affected. Therefore, it is recommended that the user switch to the first mode, so that power performance of the vehicle can be improved by intelligently adjusting the level threshold.

When the current mode is the third mode, in this embodiment of this application, whether to switch to the first mode may be determined based on the temperature parameter. For example, when the temperature parameter is less than or equal to the preset temperature (for example, -10 degrees Celsius or -5 degrees Celsius) and low-temperature duration is longer than or equal to third preset duration (for example, 20s or 60s), the mode switching information indicates the user to switch from the third mode to the first mode. The low-temperature environment greatly affects power performance of the vehicle. Therefore, indicating the user to switch from the third mode to the first mode can improve power performance of the vehicle by intelligently adjusting the level threshold in the first mode.

According to the foregoing examples, the vehicle control apparatus may determine, based on the battery level, whether to switch to the first mode. For example, when the temperature parameter is less than or equal to the preset temperature, duration is longer than or equal to the third preset duration, and the battery level of the vehicle is less than or equal to a second preset battery level (for example, 25%), the mode switching information indicates the user to switch from the third mode to the first mode. As described above, power performance of the vehicle is affected regardless of the low-temperature environment or a continuous low battery level. In this case, switching to the first mode helps improve power performance of the vehicle.

Similar to the first running parameter, the level replenishment frequency in the second running parameter may be determined based on the battery level of the vehicle. For example, the battery level of the vehicle is maintained at a third level threshold (for example, 20%) (or the battery level of the vehicle is less than the third level threshold, or a difference between the battery level of the vehicle and the third level threshold is less than or equal to a first preset value) in a level replenishment frequency detection phase. In this case, it indicates that the vehicle is not charged in the level replenishment frequency detection phase, and it is determined that the level replenishment frequency of the vehicle is 0.

Optionally, the vehicle control apparatus sends the mode switching information to the audio-visual entertainment system only once in the current driving cycle, to avoid a plurality of repeated prompts and reduce user experience.

Optionally, in the first mode, an adjustment range of the first level threshold may be between the first value and the second value. It is assumed that the first value is 70%, the second value is 20%, and the first level threshold is greater than or equal to 20% and less than or equal to 70%.

FIG. 7 is a block diagram of a vehicle control apparatus according to an embodiment of this application. As shown in FIG. 7, the vehicle control apparatus 400 includes a threshold determining module 410 and a range-extended control module 420.

The threshold determining module 410 may be configured to determine a first level threshold of a vehicle based on a first running parameter of the vehicle. The first running parameter includes an energy replenishment parameter and/or a temperature parameter, the energy replenishment parameter indicates an energy replenishment frequency and/or an energy replenishment amount of the vehicle, and the temperature parameter indicates a temperature at which the vehicle runs. The range-extended control module 420 may be configured to: when a battery level of the vehicle is less than the first level threshold, control an electricity generation apparatus of the vehicle to generate electricity.

A specific process in which the modules perform the foregoing corresponding steps has been described in detail in the foregoing method embodiments. For brevity, details are not described herein again.

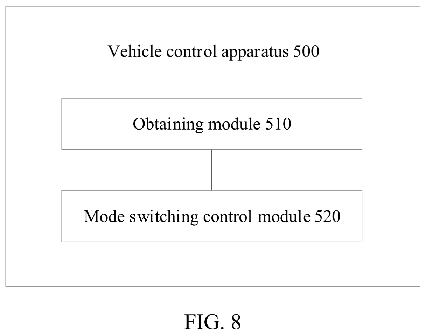

FIG. 8 is another block diagram of a vehicle control apparatus according to an embodiment of this application. As shown in FIG. 8, the vehicle control apparatus 500 includes an obtaining module 510 and a mode switching control module 520.

The obtaining module 510 may be configured to obtain a second running parameter of a vehicle. The second running parameter includes at least one of an energy replenishment parameter, a traveling frequency, and a temperature parameter, the energy replenishment parameter indicates an energy replenishment frequency and/or an energy replenishment amount of the vehicle, and the temperature parameter indicates a temperature at which the vehicle runs. The mode switching control module 520 may be configured to control, based on the second running parameter, the vehicle to push mode switching information. The mode switching information indicates a user to switch to a first mode, and a first level threshold of the vehicle in the first mode is determined based on the energy replenishment parameter and/or the temperature parameter of the vehicle.

A specific process in which the modules perform the foregoing corresponding steps has been described in detail in the foregoing method embodiments. For brevity, details are not described herein again.

Division of the modules in the apparatuses 400 and 500 is merely logical function division. During actual implementation, all or some of the modules may be integrated into one physical entity, or may be physically separated.

The processor in embodiments of this application may be an integrated circuit chip, and has a data processing capability. In an implementation process, the steps in the foregoing method embodiments can be implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through example but not limitative descriptions, a plurality of forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memories of the systems and methods described in this specification include but are not limited to these and any memory of another proper type.

The memory is an example but is not a limitation. For example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (Direct Rambus RAM, DR RAM), or the like. In other words, the memory in embodiments of this application is intended to include, but not limited to, these memories and any memory of another proper type.

An embodiment of this application further provides an electronic device. The electronic device may be implemented as the vehicle control apparatus in embodiments of this application, and includes a processor and a memory. The memory is configured to store a computer program. The processor is configured to invoke and run the computer program stored in the memory, to perform corresponding procedures in the methods in embodiments of this application. For brevity, details are not described herein again.

An embodiment of this application further provides a computer-readable storage medium, configured to store a computer program.

In some embodiments, the computer-readable storage medium may be used in the vehicle control apparatus in embodiments of this application, and the computer program enables a computer to perform corresponding procedures in the methods in embodiments of this application. For brevity, details are not described herein again.

An embodiment of this application further provides a computer program product, including computer program instructions.

In some embodiments, the computer program product may be used in the vehicle control apparatus in embodiments of this application, and the computer program instructions enable a computer to perform corresponding procedures in the methods in embodiments of this application. For brevity, details are not described herein again.

An embodiment of this application further provides a computer program.

In some embodiments, the computer program may be used in the vehicle control apparatus in embodiments of this application. When the computer program is run on a computer, the computer is enabled to perform corresponding procedures in the methods in embodiments of this application. For brevity, details are not described herein again.

An embodiment of this application further provides a vehicle.

In some embodiments, the vehicle includes the vehicle control apparatus in embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A vehicle control method, wherein the method comprises:
determining a first level threshold of a vehicle based on a first running parameter of the vehicle, wherein the first running parameter comprises an energy replenishment parameter and/or a temperature parameter, the energy replenishment parameter indicates an energy replenishment frequency and/or an energy replenishment amount of the vehicle, and the temperature parameter indicates a temperature at which the vehicle runs; and
when a battery level of the vehicle is less than the first level threshold, controlling an electricity generation apparatus of the vehicle to generate electricity.

2. The method according to claim 1, wherein
the energy replenishment parameter comprises a level replenishment parameter, and the first level threshold is in a negative correlation with the level replenishment parameter of the vehicle; and/or
the energy replenishment parameter comprises a fuel replenishment parameter, and the first level threshold is in a positive correlation with the fuel replenishment parameter of the vehicle.

3. The method according to claim 1 or 2, wherein the first level threshold is in a negative correlation with the temperature parameter.

4. The method according to claim 1 or 2, wherein the determining a first level threshold of a vehicle based on a first running parameter of the vehicle comprises:
determining a first level threshold in a second adjustment phase based on an energy replenishment parameter of the vehicle in a first adjustment phase, wherein the second adjustment phase is later than the first adjustment phase; and the vehicle performs at least one of the following in the first adjustment phase:
traveling a first range; or
running duration is first duration; or
completing N driving cycles, wherein N is a positive integer.

5. The method according to claim 4, wherein the energy replenishment parameter comprises the energy replenishment parameter in the first adjustment phase; and
the determining a first level threshold in a second adjustment phase based on an energy replenishment parameter of the vehicle in a first adjustment phase comprises:
determining the first level threshold in the second adjustment phase from a first correspondence based on the energy replenishment parameter in the first adjustment phase, wherein the first correspondence is a correspondence between the first level threshold and the energy replenishment parameter, wherein
the energy replenishment parameter comprises a level replenishment parameter, and the first level threshold in the first correspondence is in a negative correlation with the level replenishment parameter; and/or
the energy replenishment parameter comprises a fuel replenishment parameter, and the first level threshold in the first correspondence is in a positive correlation with the fuel replenishment parameter.

6. The method according to claim 4 or 5, wherein the determining a first level threshold in a second adjustment phase based on an energy replenishment parameter of the vehicle in a first adjustment phase comprises:
determining the first level threshold in the second adjustment phase based on a first frequency interval in which an energy replenishment frequency of the vehicle in the first adjustment phase falls; or
determining the first level threshold in the second adjustment phase based on a first energy interval in which an energy replenishment amount of the vehicle in the first adjustment phase falls; or
determining a first candidate threshold based on a first frequency interval in which an energy replenishment frequency of the vehicle in the first adjustment phase falls, determining a second candidate threshold based on a first energy interval in which an energy replenishment amount of the vehicle in the first adjustment phase falls, and then determining the first level threshold based on the first candidate threshold and the second candidate threshold, wherein
the first frequency interval is comprised in M₁ preset frequency intervals, M₁ is a positive integer, and the M₁ preset frequency intervals are in a one-to-one correspondence with M₁ preset thresholds; and the first energy interval is comprised in M₂ preset energy intervals, M₂ is a positive integer, and the M₂ preset frequency intervals are in a one-to-one correspondence with M₂ preset thresholds.

7. The method according to claim 4 or 5, wherein the determining a first level threshold in a second adjustment phase based on an energy replenishment parameter of the vehicle in a first adjustment phase comprises:
determining a level maintenance adjustment amount in the second adjustment phase based on a second frequency interval in which an energy replenishment frequency of the vehicle in the first adjustment phase falls; or
determining a level maintenance adjustment amount in the second adjustment phase based on a second energy interval in which an energy replenishment amount of the vehicle in the first adjustment phase falls; or
determining a first level maintenance adjustment amount based on a second frequency interval in which an energy replenishment frequency of the vehicle in the first adjustment phase falls, determining a second level maintenance adjustment amount based on a second energy interval in which an energy replenishment amount of the vehicle in the first adjustment phase falls, and determining a level maintenance adjustment amount in the second adjustment phase based on the first level maintenance adjustment amount and the second level maintenance adjustment amount, wherein
the second frequency interval is comprised in M₃ preset frequency intervals, M₃ is a positive integer, and the M₃ preset frequency intervals are in a one-to-one correspondence with M₃ level maintenance adjustment amounts; and the second energy interval is comprised in M₄ preset energy intervals, M₄ is a positive integer, and the M₄ preset frequency intervals are in a one-to-one correspondence with M₄ level maintenance adjustment amounts; and
adjusting a first level threshold in the first adjustment phase based on the level maintenance adjustment amount in the second adjustment phase, to obtain the first level threshold in the second adjustment phase.

8. The method according to any one of claims 4 to 7, wherein the method further comprises:
determining, as the energy replenishment frequency of the vehicle in the first adjustment phase, a total quantity of energy replenishment times energy replenishment duration is longer than or equal to preset energy replenishment duration for the vehicle in the first adjustment phase.

9. The method according to claim 1 or 3, wherein the determining a first level threshold of a vehicle based on a first running parameter of the vehicle comprises:
determining the first level threshold of the vehicle based on a first temperature interval in which a minimum ambient temperature at which the vehicle runs in a first detection interval falls; or
determining the first level threshold of the vehicle based on a second temperature interval in which a minimum battery temperature at which the vehicle runs in a first detection interval falls; or
determining a third candidate threshold based on a first temperature interval in which a minimum ambient temperature at which the vehicle runs in a first detection interval falls, determining a fourth candidate threshold based on a second temperature interval in which a minimum battery temperature at which the vehicle runs in the first detection interval falls, and then determining the first level threshold of the vehicle based on the third candidate threshold and the fourth candidate threshold, wherein
the vehicle runs N driving cycles in the first detection interval or running duration of the vehicle in the first detection interval is second preset duration, N is a positive integer, both the first temperature interval and the second temperature interval are comprised in L preset temperature intervals, L is a positive integer, and the L preset temperature intervals are in a one-to-one correspondence with L first level thresholds.

10. The method according to claim 9, wherein the first level threshold is greater than or equal to a first battery level, the first battery level is a minimum level required for a battery to provide a first discharge power for the vehicle at the first temperature, and the first discharge power has a capability of driving the vehicle.

11. The method according to claim 9 or 10, wherein a difference in detection time of a minimum temperature or a minimum ambient temperature in any two adjacent driving cycles in the N driving cycles is less than or equal to a preset time difference.

12. The method according to any one of claims 1 to 3, wherein the determining a first level threshold of a vehicle based on a first running parameter of the vehicle comprises:
determining a fifth candidate threshold of the vehicle based on the energy replenishment parameter of the vehicle, and determining a sixth candidate threshold of the vehicle based on the temperature parameter; and
determining the first level threshold of the vehicle based on the fifth candidate threshold and the sixth candidate threshold.

13. The method according to claim 12, wherein the first level threshold of the vehicle is a larger value between the fifth candidate threshold and the sixth candidate threshold.

14. The method according to any one of claims 1 to 13, wherein a level replenishment frequency of the vehicle is determined based on the battery level of the vehicle.

15. The method according to claim 14, wherein the battery level of the vehicle is equal to a second level threshold of the vehicle, or a difference between the battery level of the vehicle and the second level threshold is less than or equal to a first preset value, the level replenishment frequency of the vehicle is 0, and the second level threshold is a level threshold of the vehicle in a level replenishment frequency detection phase.

16. A vehicle control method, wherein the method further comprises:
obtaining a second running parameter of a vehicle, wherein the second running parameter comprises at least one of an energy replenishment parameter, a traveling frequency, and a temperature parameter, the energy replenishment parameter indicates an energy replenishment frequency and/or an energy replenishment amount of the vehicle, and the temperature parameter indicates a temperature at which the vehicle runs; and
controlling, based on the second running parameter, the vehicle to push mode switching information, wherein the mode switching information indicates a user to switch to a first mode, and a first level threshold of the vehicle in the first mode is determined based on the energy replenishment parameter and/or the temperature parameter of the vehicle.

17. The method according to claim 16, wherein a current mode is a second mode, a level threshold of the vehicle in the second mode is a first value, the first value is greater than or equal to the first level threshold of the vehicle in the first mode, and the energy replenishment parameter comprises a level replenishment parameter and/or a fuel replenishment parameter; and
the energy replenishment parameter of the vehicle meets at least one of the following, and the mode switching information indicates the user to switch from the second mode to the first mode:
a level replenishment frequency of the vehicle is greater than or equal to a preset level replenishment frequency;
a fuel replenishment frequency of the vehicle is less than or equal to a preset fuel replenishment frequency; and
the temperature parameter is greater than or equal to a preset temperature.

18. The method according to claim 16, wherein the traveling frequency comprises a quantity of traveling times of the vehicle in a third mode, a level threshold of the vehicle in the third mode is a second value, and the second value is less than or equal to the first level threshold of the vehicle in the first mode; and
the quantity of traveling times of the vehicle in the third mode is greater than or equal to a preset quantity of traveling times, and the mode switching information indicates the user to switch from the third mode to the first mode.

19. The method according to claim 18, wherein a battery level of the vehicle in a current driving cycle is less than or equal to a first preset battery level.

20. The method according to claim 16, wherein a current mode is a third mode; and
the temperature parameter is less than or equal to a preset temperature and duration is longer than or equal to third preset duration, and the mode switching information indicates the user to switch from the third mode to the first mode.

21. The method according to claim 20, wherein the temperature parameter is less than or equal to the preset temperature and the duration is longer than or equal to the third preset duration and a battery level of the vehicle is less than or equal to a second preset battery level, and the mode switching information indicates the user to switch from the third mode to the first mode.

22. The method according to any one of claims 16 to 21, wherein the level replenishment frequency of the vehicle is determined based on the battery level of the vehicle.

23. The method according to claim 22, wherein the battery level of the vehicle is equal to a third level threshold of the vehicle, or a difference between the battery level of the vehicle and the third level threshold of the vehicle is less than or equal to a second preset value, the level replenishment frequency of the vehicle is 0, and the third level threshold is a level threshold of the vehicle in a level replenishment frequency detection phase.

24. A vehicle control apparatus, comprising a module configured to perform the method according to any one of claims 1 to 23.

25. A vehicle, comprising a vehicle control apparatus, wherein the vehicle control apparatus is configured to perform the method according to any one of claims 1 to 23.

26. A computer-readable storage medium, configured to store computer program instructions, wherein the computer program enables a computer to perform the method according to any one of claims 1 to 23.

27. A computer program product, comprising computer program instructions, wherein the computer program instructions enable a computer to perform the method according to any one of claims 1 to 23.
